# EUROPEAN PATENT APPLICATION

(11) **EP 4 553 689 A1**
(43) Date of publication of application: **14.05.2025**
(21) Application number: 23306921.0
(22) Date of filing: 07.11.2023
(51) Int. Cl.: G06F 30/12, G06F 30/17, G06F 30/27, G06F 111/20

(54) **OPERATOR CONNECTION IN BLOCK REPRESENTATION**

(71) Applicant: Dassault Systèmes, 78140 Vélizy-Villacoublay (FR)
(72) Inventor: FERREIRA, Isaque, Vélizy-Villacoublay (FR); BELLON, Nicolas, Vélizy-Villacoublay (FR); FEDRITZI, Benjamin, Vélizy-Villacoublay (FR)
(74) Representative: Bandpay & Greuter

(57) **Abstract**

The disclosure notably relates to a computer-implemented method for designing a 3D modeled object representing a product to be manufactured, the designing method comprising. The method comprises, by a computer system, displaying simultaneously a 3D shape representation of the 3D modeled object, and a 2D block representation of the 3D modeled object. The method also comprises by a user interacting graphically with the 2D block representation, performing a selection of one or more block nodes among the at least one block node, upon user-action, adding to the 2D block representation a block node representing a respective operator of the subset, and automatically determining a respective arc between the output connector of each selected block node and a respective input connector of the added block node. The disclosure improves ergonomics.

## Description

### TECHNICAL FIELD

The disclosure relates to the field of computer programs and systems, and more specifically to methods, devices and programs related to the automatic computation and addition of one or more arcs in a block representation of a product to be manufactured.

### BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

As part of the CATIA software suite, xGenerative Design is a known web application that allows designing a 3D modeled object representing a product to be manufactured, based on a 2D block representation of the 3D modeled object. In said application, a user may select one or more block nodes of the 2D block representation, then add a new block node to be connected to the one or more selected connectors, and then manually create and add one or more respective arcs to perform said connection.

Ergonomics of such a solution needs to be improved.

### SUMMARY

It is therefore provided a computer-implemented method for designing a 3D modeled object representing a product to be manufactured, the designing method comprising. The designing method comprises, by a computer system, displaying simultaneously a 3D shape representation of the 3D modeled object, and a 2D block representation of the 3D modeled object. The 2D block representation comprises block nodes, one or more input connectors and an output connector on each respective block node, and arcs each between the output connector of a first block node and a respective input connector of a second block node.

Each block node represents a respective operator among a predetermined set of operators, each operator of the predetermined set of operators having one or more inputs and an output. For at least a subset of operators among the predetermined set of operators, the output of each respective operator of the subset is a respective set of one or more geometrical objects. At least one block node represents an operator of the subset, and each input of each operator of the subset and the output of each operator of the subset each have a respective object type.

Each input connector represents a respective input of the respective operator represented by the respective block node. The output connector represents the output of the respective operator represented by the respective block node.

Each arc represents data flow from the output connector of the first block node to the respective input connector of the second block node.

The 2D block representation is configured such that an execution of the data flow represented by the arcs of the 2D block representation outputs the 3D shape representation.

The method also comprises by a user interacting graphically with the 2D block representation, performing a selection of one or more block nodes among the at least one block node.

The method also comprises, upon user-action, adding to the 2D block representation a block node representing a respective operator of the subset, automatically determining a respective arc between the output connector of each selected block node and a respective input connector of the added block node, adding to the 2D block representation each determined arc, and updating the display of the 2D block representation, at least by displaying the added block node and each added arc.

The method further comprises executing the data flow represented by the arcs of the updated 2D block representation, thereby outputting an updated 3D shape representation, and displaying the updated 3D shape representation.

Such a designing method forms an improved solution for designing a 3D modeled object representing a product to be manufactured, as it provides the ergonomics of a software application which displays a 2D block representation simultaneously to a 3D shape representation, with all the graphical user-interaction capabilities offered by this type of application, such as the ability for the user to graphically interact with the 2D block representation in order to select one or more of the displayed elements and make editions. In addition, by automatically computing a respective arc between the output connector of each selected block node and a respective connector of the added block node, the designing method reduces user burden for the task of adding the arcs to the 2D block representation, and thereby allows to connect in a facilitated manner the selected one or more block nodes to the added block node. By then executing the data flow, the designing method allows for an ergonomic update of the displayed 3D shape representation, which is eventually to be fed potentially as such to a manufacturing process which may be automatic.

The designing method may comprise one or more of the following:
- each respective object type is one among a predetermined tree of object types, where each non-leaf object type is dynamic, each descendant object type of said non-leaf object type being compatible to said non-leaf object type;
- the automatic determining (S85) comprises determining an arc combination for which a predetermined incompatibility metric has the lowest value, among all arc combinations that (i) include a respective arc between the output connector of each selected block node and a respective input connector of the added block node, and (ii) for which the object type of the output connector of each respective arc is identical to or compatible to the object type of the respective input connector of the added block node;
- the incompatibility metric penalizes, for a given arc combination, for each given arc for which the object type of the output connector is a descendant of the object type of the respective input connector of the added block node, the tree distance between the object type of the output connector and the object type of the respective input connector;
- the incompatibility metric is equal, for a given arc combination, to a sum of a number of one or more penalties equal to the cardinality of the combination,
- each arc of the given arc combination provides a penalty in the sum equal to the tree distance between the object type of the output connector of the arc and the object type of the respective input connector of the added block node for the arc, when one of the two conditions is realized: the object type of the output connector is the same as the object type of the respective input connector of the added block node, or, the object type of the output connector is a descendant of the object type of the respective input connector of the added block node;
- the predetermined tree of object types comprises the following types:
   ∘ a root type,
   ∘ having the root type has a parent, a literal type, a geometry type, and a matrix type,
   ∘ having the literal type as a parent, a real type, a string type, and a Boolean type
   ∘ having the geometry type as a parent, a point type, a curve type, a surface type, and a volume type,
   ∘ having the matrix type as a parent, a vector type,
   ∘ having the real type as a parent, an integer type and a magnitude type, the magnitude type having as children a length type and an angle type,
   ∘ having the curve type as a parent, a line type, and
   ∘ having the surface type as a parent, a plane type;
- the predetermined tree of object types comprises one or more first object types each convertible into one or more respective second object types, each first object type convertible into a respective second object type being different from and not a descendant of said respective second object type, each first object type being convertible into a respective second object type according to a respective predetermined conversion algorithm, each first object type convertible into a respective second object type being thereby compatible to said respective second object type;
- the incompatibility metric penalizes, for a given arc combination, for each given arc for which the object type of the output connector is convertible into the object type of the respective input connector of the added block node, occurrence of the given arc;
- the incompatibility metric penalizes said occurrence to a higher extent than said tree distance, wherein optionally one occurrence is penalized more than 100 times, 200 times, or 500 times, for example about 1000 times, a tree distance of 1;
- the incompatibility metric is equal, for a given arc combination, to a sum of a number of one or more penalties equal to the cardinality of the combination, each arc of the given arc combination providing a penalty in the sum equal to a value higher than 100, 200, or 500, for example equal to about 1000, when the following condition is realized: the object type of the output connector is convertible into the object type of the respective input connector;
- the real type is convertible into the integer type, into the length type, and into the angle type;
- the integer type is convertible into the length type, and into the angle type;
- the Boolean type is convertible into the integer type;
- the point type is convertible into the vector type;
- the curve type is convertible into the plane type;
- the line type is convertible into the vector type;
- the plane type is convertible into the vector type, into the line type, and into the matrix type;
- the volume type is convertible into the surface type;
- a first object type is compatible to a second object type only if the first object type is a descendant of the second object type or the first object type is convertible into the second object type;
- the user-action comprises navigating in a menu to select the respective operator of the subset;
- the menu provides an automatic suggestion of several operators of the subset based on the lowest value of an incompatibility metric computed per operator; and/or
- each operator has a searchable name, the user-action comprising performing a semantic search in the menu, the automatic suggestion being based on the lowest value of an incompatibility metric computed per operator matching the semantic search.

It is further provided a computer program comprising instructions for performing the designing method. When executed by a processor, the instructions cause the processor to perform the designing method.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG. 1 shows a flowchart of an example of the designing method;
- FIG. 2 shows an example of the device as a computer system;
- FIG.s 3-18 illustrate an implementation of the methods, programs and devices of the present disclosure.

### DETAILED DESCRIPTION

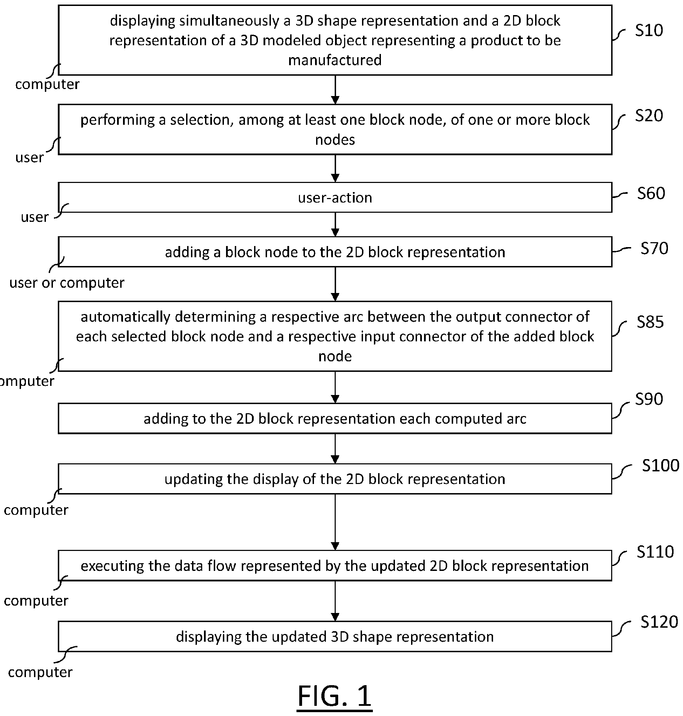

With reference to the flowchart of FIG. 1, it is proposed a computer-implemented method for designing a 3D modeled object representing a product to be manufactured (i.e., a product of manufacture, in other words a manufacturing product). The designing method of FIG. 1 involves a user interacting with a 2D block representation of the 3D modeled object displayed by a computer system (e.g., on one or more screens of the computer system or of another computer system served by the computer system), in an improved manner from the point of view of ergonomics. The interaction is performed within a software application run locally on a computer system or within a web application served by a (e.g., distant/remote) computer system to a local workstation. When actions are indicated as being performed by "the" computer system in the present disclosure, and in particular on FIG. 1, it must be understood that these actions may in fact be at least partly performed and/or triggered by such software or web application.

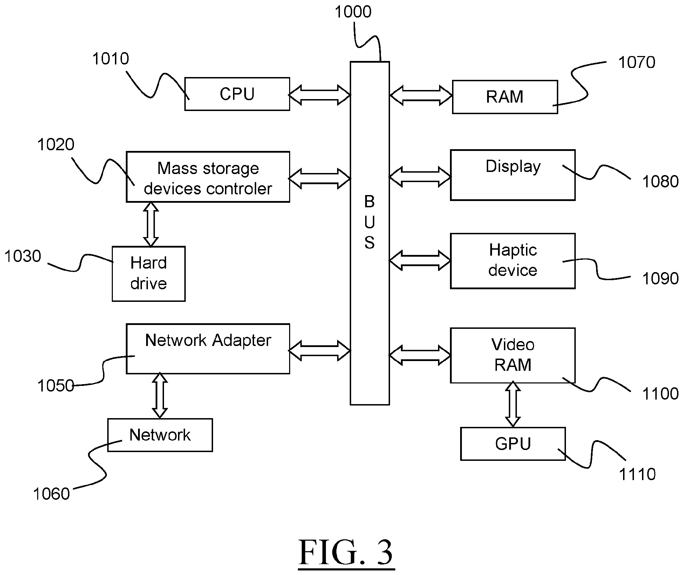

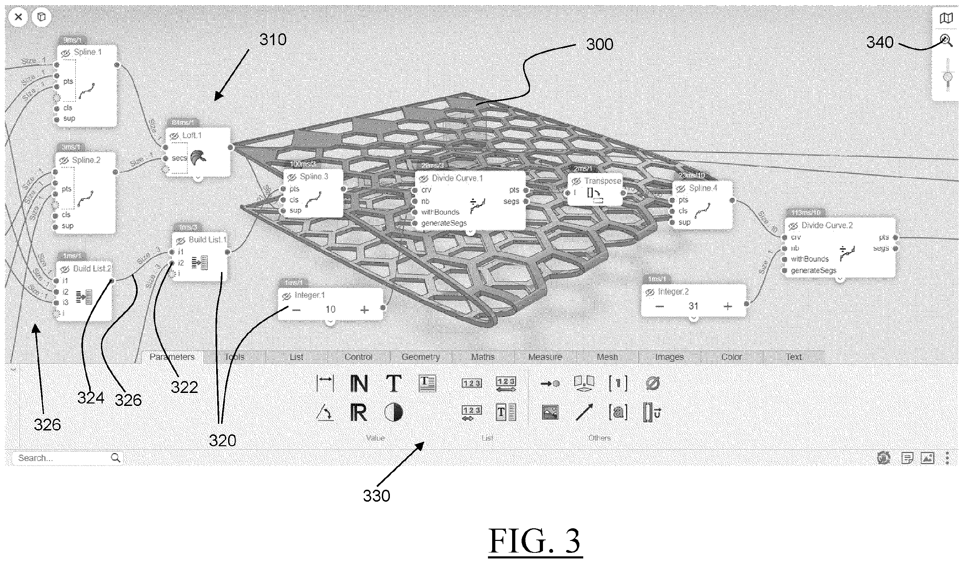

The designing method comprises, by the computer system, displaying S10 simultaneously a 3D shape representation of the 3D modeled object, and the 2D block representation of the 3D modeled object. This allows the user to interact with the 2D block representation while viewing the 3D shape representation at the same time. While the 2D block representation offers, as known, an ergonomic interface to define and edit parameters related to the shape of the product to be manufactured, the 3D shape representation allows the user to directly view the end result, thus having a sight of the exact shape that will be eventually manufactured. The designing method may at S10 display the 3D shape representation and the 2D block representation aside each other, for example in two separate windows or two separate scenes of a same window, displayed aside on a same screen or each on a respective one of two distinct screens. Alternatively, the designing method may at S10 display the 3D shape representation and the 2D block representation one superposed over the other, for example the 2D block representation superposed over (e.g., and in foreground of) the 3D shape representation (e.g., see FIG. 3). Although represented by a single box in the flowchart of FIG. 1, the simultaneous display of S10 may be performed throughout the remainder of the designing method, such that each user-interaction of the designing method resulting in an update of the 2D block representation and/or in an update of the 3D shape representation may yield an update in what the user sees on screen(s). The update of the display S10 may be performed automatically and/or in real-time (where the expression "real-time" may refer to a lag of at most 10 seconds or even 1 second, here and/or at any other use of this expression in the remainder of the disclosure), upon determination by the computer system of an update of the 2D block representation and/or an update of the 3D shape representation.

The 2D block representation displayed at S10 comprises block nodes, one or more input connectors and an output connector on each respective block node, and arcs each between the output connector of a first block node and a respective input connector of a second block node.

By "block node" it is meant any 2D graphism of a block shape, for example a rectangle or square shape, or alternatively any other polygonal shape, such as a trapezoid shape, a circle or oval shape, or any other type of block-like shape distinguishable as a block to the user. The 2D block representation may be displayed over a background, and the different block nodes may be physically separated on the display, e.g., with a non-zero gap between each pair of block nodes. A "block node" is a node of a virtual graph, wherein the virtual graph consists of blocks as its graph nodes/vertices, with a graph arc/edge between two graph nodes if there is at least one arc (in the 2D block representation) between the two corresponding block nodes. This virtual graph may be referred to as the "graph corresponding to the 2D block representation".

The one or more input connectors and the output connector of each respective block node may each be represented by a respective graphism displayed on the respective block node, for example by a respective symbol displayed over the respective block node. The respective block node may comprise a boundary line, and at least one (e.g., each) such respective graphism (e.g., symbol) may be displayed over said boundary line. Each such respective graphism (e.g., symbol) may be smaller than the respective block node, for example at least ten times smaller in terms of occupied area in the 2D block representation (i.e., area occupied on screen). Each such respective graphism (e.g., symbol) may be a small compact symbol, for example a dot, a bullet, or a square, or any other type of shape distinguishable from the block nodes to the user. The different connectors may be physically separated on the display, e.g., with a non-zero gap between each pair of connectors. The one or more input connectors of each respective block node may all have a visually identical or identically-shaped respective graphism, and said respective graphism may optionally be visually identical or identically-shaped to the respective graphism of the output connector(s) of the respective block node. Optionally, the one or more input connectors of all block nodes may all have a visually identical or identically-shaped respective graphism, and said respective graphism may further optionally be visually identical or identically-shaped to the respective graphism of the output connector(s) of all block nodes. All connectors may for example be represented by the same dot symbol. Optionally, all block nodes may be oriented in a same manner in the 2D block representation, and all input connectors in the 2D block representation may be arranged on a same side of their respective block nodes, for example on a left side of their respective block nodes, and/or all output connectors in the block representation may be arranged on a same side of their respective block nodes, for example on a right side of their respective block nodes. For example, all block nodes may be represented each by a respective rectangle (or rectangular shape), and each rectangle may be oriented with its sides parallel to the screen's sides. All input connectors of each block node may be represented by an identical or identically-shaped dot shape/symbol and all on the left side of the rectangle, and all output connectors may be represented by an identical or identically-shaped dot shape/symbol (e.g., same dot shape/symbol as for the input connectors) and all on the right side of their respective block node's rectangle (e.g. see FIG. 3).

Each arc may be represented by a respective line linking the graphism/symbol (e.g., dot shape) of the output connector of the first block node and the graphism/symbol (e.g., dot shape) of the respective input connector of the second block node.

The block nodes, connectors and arcs may each be user-selectable, for example by the user interacting graphically with the 2D block representation, and in particular by the user interacting graphically specifically with the element to be selected, for example using a haptic device such as a mouse or a touch pad or a touch screen. The system may be configured for a user to be able to perform such a selection for example by mouse-clicking or screen-touching on a block node, connector or arc, and/or by a user drawing a selection region comprising at least a portion of a block node or arc, or the entirety of a connector (e.g., graphical selection box or rectangle), optionally by a select-move-release feature (e.g., by mouse-clicking or screen-touching on a first location, moving of cursor or of screen touch to a second location while maintaining the click or touch, and releasing the click or touch at the second location). Each user-selection of a block node, connector or arc may be automatically followed in real-time by a visual feedback, such as a visual highlighting (e.g., color change or intensity or opacity change) of the selected element or a slight movement (e.g., bounce feedback) of the selected element. Such graphical interactions allow the user to easily edit the 3D modeled objection by manipulating the 2D block representation, and any selection mentioned in the present disclosure may be performed accordingly.

Such a 2D block representation may thus be designed and/or edited easily by a user graphically interacting with the system to instantiate block nodes, to move instantiated block nodes via drag-and-drop actions, and/or to instantiate arcs between connectors for example by selecting one after the other the two connectors, and/or by drag-and-dropping one or more extremities of instantiated arcs to clip each extremity to one connector. Selection of block nodes and/or connector may also trigger the displaying of a dialog box, for example including an editable data field, for the user to enter or modify a value, e.g., using a keyboard or a displayed scroll bar.

Each block node represents a respective operator among a predetermined set of operators. By "predetermined", it is meant functional data (here, a set of operators) supported by the software/application running on or served to the computer system, i.e., part of the computer program instructions forming the application. By "operator", it is meant a set of computer data configured for taking input data, for processing said input data, and for providing output data resulting from the processing. Each operator of the predetermined set of operators thereby has one or more inputs and at least one output. Thus, in the block nodes referred to as being displayed at S10, each input connector represents a respective input of the respective operator represented by the respective block node, and the output connector represents an output of the respective operator represented by the respective block node. In addition to any input represented by a respective input connector, any respective operator may optionally comprise one or more internal parameters that are editable by the user, for example by selecting the operator by the user, displaying one or more editable value fields by the computer system or transitioning an already-displayed value field from editable to non-editable, with a visual feedback displayed to the user to notify said transition, and entering or modifying at least one value of an internal parameter in at least one editable value field.

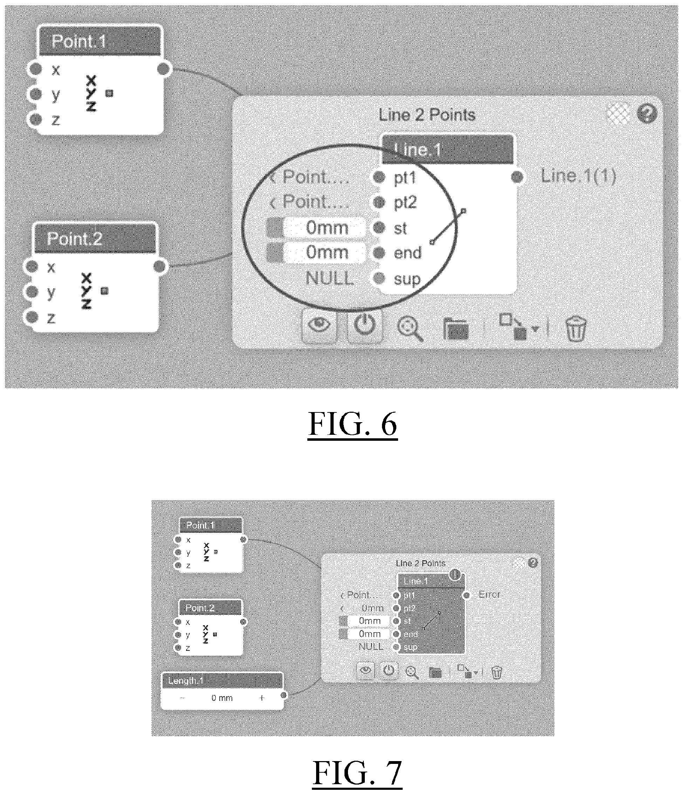

Now, the 2D block representation may optionally comprise additional block nodes that are non-standard in that they have no input connector, either because the input data of the operators represented by such block nodes are hidden to the user, and thus non-editable, or because the block nodes output static data rather than the dynamic result of an operation. The latter option may be the case for example for a "reference" block node, which may provide a common reference frame 0xyz to the design, and/or for primitive block nodes (integer, floating point, length, etc) (e.g., see block node "Length.1" on FIG. 7). Alternatively, such reference and primitives may be represented within the block nodes that they feed.

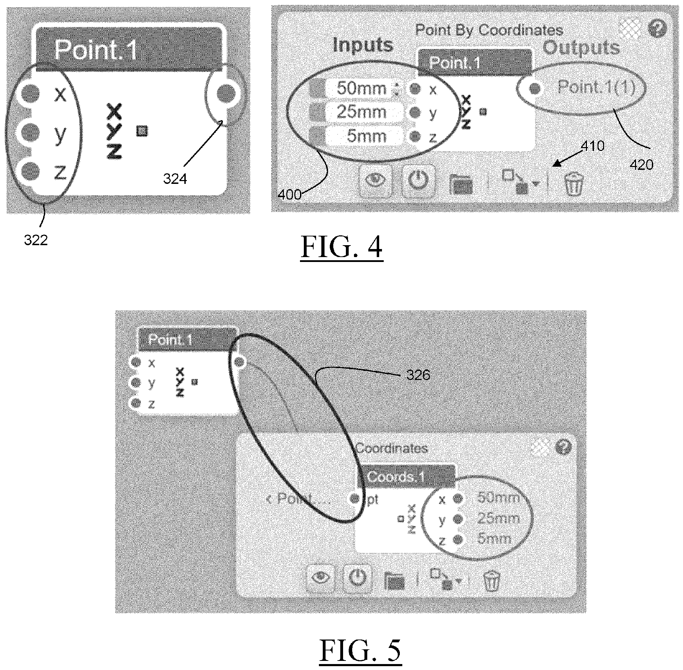

For example, for an operator taking an integer value as an input, this may be represented by a first block node representing the operator and a second block node outputting the integer, and an arc from the output connector of the second block node to a respective input connector of the first block node. The second block node may be an instantiation of a generic integer block node, and the user may parameterize the block node to define the integer value. This allows reusability of the second block node. Alternatively, instead of such a second block node, the integer value may be defined directly at the first block node as an internal parameter (e.g., see data fields 400 on FIG. 4 which allow to directly enter length values). A graphism similar to or identical to or identically-shaped to the graphism of the input connector(s) may be displayed on the first block node and selectable by the user to perform such parameterization, by selecting the graphism and entering or modifying a value in a corresponding editable data field as discussed above.

Additionally or alternatively, the 2D block representation may optionally comprise one or more block nodes each having one or more input connectors that can both, selectively, be connected via an arc to an output connector (for an incoming data flow), or left unconnected but selectable by the user to directly enter a data value at the input connector. This provides flexibility to the user.

Additionally or alternatively, the 2D block representation may optionally comprise additional block nodes that are non-standard in that they have no output connector. This may be the case for example for a "watch" block node, which may allow to watch a "partial result" 3D shape at a particular output connector of the 2D block representation. The output of such a block node is said partial 3D shape, which only needs to be displayed to the user, for example upon selection of the block node, but is not intended to be inputted to any other block node.

Also, one or more of the (standard and/or non-standard) block nodes of the 2D block representation may each comprise several output connectors rather than only one output connector. Each such output connector may be individually selectable by the user, for example by interacting graphically with the output connector. Thus, when the expression "the output" or "the output connector" is applied in the disclosure with respect to a given operator or block node, it must be understood as referring to one of the outputs or to one of the output connectors when the given operator or block node comprises several outputs or output connectors. The outputs and accordingly the output connectors of each such given operator or corresponding block node may follow a predetermined ordering, with at least one output or output connector being defined as the unique and main output or output connector. In case of any ambiguity, when the expression "the output" or "the output connector" is applied with respect to a given operator or block node, it refers to such a main output or main output connector. According to some examples the designing method may comprises selecting one or more output connectors, for example at S20, each by graphically interacting with its respective block node and without focusing on the individual output connector(s) to be selected. In such a case, the computer system may directly interpret the selection of each respective block node as a selection of its main output connector.

In the software/application, each operator of the predetermined set of operators may have a respective data identifier, meaning that it is referred by a unique data index, name or label, that can be pointed to so as to instantiate the operator in one 2D block representation instantiation, such as the 2D block representation displayed at S10. Each input of each operator further may have a respective data identifier, and similarly each output of each operator may have a respective data identifier. Such identifiers allow, in the 2D block representation instantiation displayed at S10, to organize a data flow/circulation, wherein data may be marked/identified to be inputted to marked/identified operators, so as to yield marked/identified output data, which in turn may be flowed toward any other process, such as other operators. Said operator identifiers, input identifiers and output identifiers may form one or more indexes. For example, the software/application may manage three indexes, including a first index storing the operator identifiers, a second index storing the input identifiers, and a third index storing the output identifiers. In other words, each identifier is a respective index value (e.g., integer) from a respective index (e.g., a set of integers, optionally continuous and/or from 1 to N). Indexing the input (respectively output) connectors over the set of all input (respectively output) connectors across all operators of the predetermined set, rather than within each respective operator, allows a strong differentiation between the input (respectively output) connectors, that enhances any optional prediction.

Each arc is between a respective pair of connectors, and specifically directed from an (origin) output connector of a first (origin) block node to an (end) input connector of a second (end) block node. Each arc represents data flow from the output connector of the first block node to the respective input connector of the second block node. Since the block nodes each represent a respective operator (sometimes static, i.e., only taking internal parameters as input), each output connector of each block node represents a data value outputted by the operator. An arc originating from said connector represents a flow or circulation of said data value toward the input connector at which the arc arrives. This is interpreted by the application as an intent that the outputted data value of said output connector be inputted as the input of the second block node at said input connector.

A same output connector may be the origin of several arcs, meaning that the data outputted at said output connector is to be flowed to several destinations (several input connectors of other block nodes). Each input connector (e.g., in most cases) may be the end of at most one arc, so as to avoid ambiguities. Alternatively, some input connectors may accept plural incoming arcs, potentially only under some conditions, this being interpreted as a reception of a collection of objects. Optionally and as further detailed later, each input connector may accept a collection of objects via a single arc (e.g., see arcs marked "Size: 3" on FIG. 3, indicating a collection of three objects incoming via a single arc). Further optionally, at least some input connectors may be dynamically duplicable to multiply potential data flow of objects of a same nature. Such duplication may be accompanied by the addition of a specific graphism (e.g., see input connectors "pts" of block node "Spline.1" on FIG. 3, with the dotted line enclosing the connectors to indicate such duplication).

Thus, the 2D block representation is configured such that an execution of the data flow represented by the arcs of the 2D block representation corresponds to a processing of data, starting from one or more root block nodes (i.e., a block node having no input connector or no arc connected to any input connector of the node), and following the data flow represented by the arcs in the arc directions, to sequentially and/or parallelly (depending on the structure of the 2D block representation) process the data according to the operators represented by each encountered block node. The 2D block representation indeed represents a global operation, which corresponds to a compound function of the operators as defined by the arrangement of arcs connecting pair of connectors of block nodes. An execution of the data flow amounts to an evaluation of the compound function.

The execution of the data flow may be performed by a data flow engine of the application. The execution of the data flow may in particular comprise compiling the data flow represented by the 2D block representation into a series of operations, involving the operators, inputs, internal parameters, outputs, as defined by the 2D block representation. The compilation may simplify the calculations according to predetermined rules, such that the series of operations yields the same result as the exact data flow, but does not follow it step-by-step. This is standard from algorithm compilation techniques. The 2D block representation displayed at S10 and the updated 2D block representation to be executed at S110 are each consistent (i.e., compilable), such that the data flow engine effectively succeeds in the compilation. This may be ensured by said 2D block representations each being logically consistent and/or by the data flow engine being configured to resolve any logical inconsistency, for example based on predetermined (e.g., arbitrary) rules.

In examples, the data processing/flow represented by the 2D block representation is finite, for example because the 2D block representation comprises no cycle, that is, no path of arcs that starts at one output connector and arrives at the same output connector. Even more so, the graph corresponding to the 2D block representation may be acyclic. During the designing of the 3D modeled object by designing the 2D block representation by the user, when an attempt to create such a cycle is performed by the user, the computer system may output an alert to indicate a compilation error, or even forbid the creation of the cycle. Alternatively, such cycles may be authorized but with a specific rule in terms of interpreting the implied data flow, such that it is finite. For example, the predetermined set of operators may comprise a loop operator, allowing to generate values according to some looping/iterative algorithm. Retroaction may be allowed for such operator, and this may thus yield arc cycles. The loop operator may have as an input or internal parameter a value controlling the number of iterations/generations, such that it is finite and thus stable.

Alternatively or additionally, each input connector may be connected to an arc such that data effectively flows into the input connector, and/or each input connector may have a default value to be used in case no arc arrives at the input connector. The default value may optionally be a null value, for example if the input represented by the input connector is optional in evaluating the operator of the block node. Similarly, any operator including an internal editable parameter may have a default value of the parameter to be used for evaluating the operator, in case the user does not enter any specific value. When inputted with one or more null values, a block node may evaluate the operator using the one or more null values or ignoring them (e.g., a line operator may have as an optional input a support plane for the line, which may be optional as the line can be drawn using only two points as input), or alternatively replacing them with default values of the concerned default connector(s) and/or internal parameter(s), or yet alternatively, for example if the input is deemed mandatory, indicate an error and/or a non-evaluation of the operator (e.g., and/or outputting an "empty" value). For example the predetermined set of operators may comprise a point-by-coordinates operator, which consists in outputting a geometric point based on input lengths x, y and z, the point having (x,y,z) as coordinates, with respect to a reference frame. The default value of all the length input connectors x, y and z of a block node representing a point-by-coordinates operator may be 0mm. If one of the input connectors x, y and z is not linked to any incoming arc feeding the input connector with a data value, or if the input connector is fed by a null value, the point-by-coordinates operator may use the default 0mm value.

In case a logical inconsistency is introduced or to be introduced in the 2D block representation, the data flow engine may automatically resolve it in any predetermined manner, output an alert, and/or prevent the introduction of the inconsistency.

For at least one specific block node (referred to as a "geometric" block node in the following), for example all block nodes of the 2D block representation, the (main) output of the respective operator represented by each such block node is a respective set of one or more geometrical objects, that is, a set of objects each representing a geometry. The "geometric" block node may be such by nature, that is because it is designed to systematically output geometry, or because of the nature of its input(s) in the 2D block representation, for example because such input is geometric and the operator represented by the "geometric" block node is one that does not change this geometric nature. The predetermined set of operators may in particular comprise a create-list operator, which creates a list of input objects. If the input objects of the operator are geometric, then the corresponding block node is considered to be geometric in the 2D block representation.

At least a subset of operators among the predetermined set of operators are such that the output of each respective operator of the subset is a respective set of one or more geometrical objects (at least potentially, e.g., possibly depending on how it is instantiated in the 2D block representation). The at least one specific block node is one that represents an operator of said subset (e.g., and which has been instantiated such that it in effect outputs one or more geometrical objects).

With such geometric block nodes, the 2D block representation is configured such that an execution of the data flow represented by the arcs of the 2D block representation outputs a 3D shape representation, in particular the one displayed at S10 or at S120.

The disclosure provides a discussion focusing on geometric block nodes (i.e., block nodes among the at least one specific block node referred to above), but it may apply equally to other types of block nodes. In particular, the selection S20 is presented as being among the at least one geometric block node, and so is the addition S70, but the user may instead perform at S20 a selection not exclusively among the at least one geometric block node, and even exclusively outside the at least one geometric block node, and/or an addition S70 not among the at least one geometric block node, and the remainder of the method of FIG. 1 may still be executed. In particular, the automatic computing S85 may still be executed, for example because its rules may apply to non-geometric block nodes (the rules may in fact be independent of the geometric or non-geometric nature of the block node). Also, the optional prediction output may still be executed, for example because non-geometric operators are included in the dataset used in the pre-training of the machine-learning. Since the discussion however focuses on describing how the designing method may help a designer modeling a 3D shape to be eventually produced in the real-word via manufacturing, an emphasis is put on the case of geometric block nodes.

Referring to object-oriented programming, the application manages a predetermined set of object types, and object instances each of one type among the predetermined set of object types. Each object type may be identified with a unique label or marker or index in the application. At least part of the object types are geometrical object types. The 2D block representation instantiates objects among the predetermined set of object types. Each value entered by the user, for example as an internal parameter value of a given block node, is an instance of one of the object types. Each output value provided by an output connector of any block node, and then inputted to an input connector, is an object instance or a collection of object instances, each object instance being of one of the object types.

Optionally, for (at least) each geometric block node, that is, each block node among the at least one block node for which the output of the respective operator represented by the block node is a respective set of one or more geometrical objects, the output of said respective operator (at a respective output connector) has a dynamic object cardinality. Optionally, the output of the operator of one or more non-geometric block nodes may also have such a dynamic object cardinality. In other words, the output provided by such a block node at the respective output connector may comprise a number of object instances that may be variable depending on the value of one or more internal parameters of the operator provided at the block node and/or on the value and/or cardinality of one or more inputs of the operator provided at the block node. The block node may thus output at the respective output connector a unique object or a collection of several objects depending on the situation.

For example, the predetermined set of operators may comprise a sequence operator, which is designed to output a list of one or more integers depending on the input values of the sequence operator, which inputs may include a lower boundary "inf", an upper boundary "sup", and a number of integers "nb" to be added to the list. The predetermined set of operators may additionally or alternatively comprise a mesh-vertices operator, which consists of outputting as a list all vertices (i.e., geometric points) of an input mesh. The predetermined set of operators may additionally or alternatively comprise a create-list (or build-list) operator, which consists in creating a list from one or more inputs provided to the corresponding block node. Such operators are designed and intended to each output a collection of a variable number of objects (that is, a dynamic number, as it depends on the current instance of the 2D block representation, and in particular its data flow at the location of the relevant block node), even though singular input and/or parameter values may have the operator output a unique (i.e., single) object instead of a collection in an exceptional situation (for example if the "nb" input connector is fed by an integer value equal to 1 in a block node of the sequence operator, which could be an "undercapacity" but authorized use of the operator).

Other examples of operators that the predetermined set of operators may additionally or alternatively comprise and that are intended to rather output a collection of objects of a dynamic cardinality include the following known operators: a rectangular-grid operator (which positions points on a plane in a rectangular pattern), a grid-UV operator (which positions points on a surface), a color-gradient operator, a split-string operator, a normal-rand operator, a sampling operator (which provides a sampling of points in space), a mesh-edges operator and/or a mesh-faces operator (which outputs edges and/or faces of a mesh), a get-items operator, a deepen operator, and/or a flatten operator.

The relevant output connector of the above operator may be marked in the computer system (application) with a "collection" label indicative of such intended output of a collection of objects rather than a unique object. Conversely, output connectors primarily designed for outputting a single object may be marked with a "unique" label indicative of such intended output of a unique object. This marking may be performed in any manner, for example by a database relating output identifiers with their respective labels.

In addition, for each geometric block node and optionally also for at least one (e.g., each) non-geometric block node, at least one (e.g., each) input of the operator may have a dynamic object cardinality. In other words, the corresponding input connector is configured for receiving a number of object instances that may be variable depending on the origin of the incoming arc. The operator may be configured to expect such a collection and thereby process the collection of input objects as a whole. Each such input connector may thus be associated with a "collection" label or a "unique" label accordingly.

For example, the predetermined set of operators may comprise a spline operator and/or a polyline operator, which are configured to each receive a list of points as input, and to output a spline curve controlled by the list of points or a polyline linking the list of points. In such examples, the operator expects a list of points as input, and thereby processes the collection at once to provide one single output geometric object.

The application may however be configured for managing data flow of collections even at connectors intended for unique objects. This may apply to all connectors of geometric (and optionally even non-geometric) block nodes. The connectors remain labeled as "unique", but depending on the data flow they may be traversed by collections of objects rather than a unique object. This behavior may also apply to connectors expecting collections, such that in this case the connectors each see a collection of collections flowing through them.

In particular, an operator may be designed for processing a single/unique object as input, and the computer system (e.g., data flow engine) may be configured, to ensure compilation, to interpret a data flow of an input collection of objects (instead of just one unique object) as multiple calls of the operator. In other words, the operator may treat each object of the input collection as one single/unique input, compute a respective output, and thereby output a corresponding collection of output objects. The computer system (e.g., data flow engine) may be configured (e.g., at compilation) to only accept the presence of a collection of N objects at one input connector, and a respective unique object at one or more other input connectors, and then evaluate the operator N times, each time using a respective object of the collection for that input connector, and using the respective unique object each time for each other input connector, thereby outputting a collection of N output objects. Alternatively, the computer system (e.g., data flow engine) may be configured (e.g., at compilation) to accept the presence of a collection of N objects at one input connector, and to potentially accept the presence of a collection of objects at one or more other input connectors, but in which case with said collection necessarily having a cardinality of N as well. The execution of the data flow may still evaluate the operator N times in such a case, each time using index i from 1 to N to retrieve an input object from each collection, using the respective unique object each time for each remaining input connector (having no input collection), thereby outputting a collection of N output objects. In case the cardinalities in the inputs are different, the system may output an alert and fail compilation.

For example, the predetermined set of operators may comprise a point-by-coordinates operator as mentioned earlier, and the input connector x may be fed with a list of N length values x1,...xN, instead of a single one, and a single value y1 and a single value z1 for the other input connectors. In such a case the operator outputs a collection of N points: (x1,y1,z1),...(xN,y1,z1). The same operator may be fed with a list of N length values x1,...xN for the x input connector, with a list of N length values y1,...yN for the y input connector, and with a single value z1 for the z input connector. The output of the block node may in such a case be the following collection of N points (thanks to the data flow engine optionally supporting this situation): (x1,y1,z1),...(xN,yN,z1), where xi always equals yi. In case the two lists x1,...xN and y1,...yN did not have the same cardinality, the system would output an alert and fail compilation.

Such a collection of points may then be inputted to an operator expecting a collection of points, such as a spline or polyline operator as mentioned above. In examples, an operator expecting a collection of objects, such as a spline or polyline operator, may receive as input a collection of collections of objects. The operator may be evaluated individually for each collection of objects. In the example of the spline operator, the block node would receive a collection of lists of points. Each list of points yields a respective spline. The block node thus outputs a collection of splines.

Such dynamic object cardinality management provides high ergonomics to the 2D block representation, as a reduced number of blocks may be used to generate collections of geometries. In particular, the 2D block representation may be configured such that a dynamic object cardinality can be used -if desired- to input data to each input connector of each geometric operator block node. This provides high flexibility to the user to generate complex patterns involving collections of objects.

In reference to object-oriented programming in combination with the notion of "type" or "data type" in computer programming, the application manages typed objects, meaning that each object flowing over an arc from an input connector to an output connector, in other words each object passing through or received at an input connector or an output connector, has a data/object type among the predetermined set of object types. Each operator expects objects among one or more possible object types as input, and each operator outputs objects of one or more possible object types, depending on the operator, internal parameter values of the operator, and object type of the input(s) of the operator. For example, the expected object type of the point-by-coordinates operator for each input connector x,y or z is a length object type. The expected objected type of the (main) input connector of the spline operator is a point object type, as the spline operator expects to receive a collection of points to trace a curve passing through said points. As can be seen, the expected type comes in addition to the expected cardinality. An input connector may expect a same object type as another input connector, but the two connectors may expect different cardinalities. Every connector may thus be marked with a label indicative of its expected object type.

Thus, every connector (input or output) of the 2D bock representation may have a static (i.e., pre-defined) cardinality value and a static (i.e., pre-defined) object type. The static cardinality and static object type are information pre-existing to the initial creation of the 2D block representation, and for example stored (persistently throughout the whole design session, whichever modifications of the 2D block representation occur) in a database relating generically connector identifiers to such information (e.g., on non-volatile memory).

The static cardinality value is a value depending on the object cardinality intended for the connector. It may optionally be a binary value indicative of whether the cardinality is 1 or higher than 1, that is, a piece of information indicative of whether the connector is intended for a unique/single object or rather a collection of (several) objects, to pass through the connector. Such a binary value increases accuracy of the optional prediction, as the prediction may depend mostly on whether the cardinality is 1 or higher than 1, rather than on the exact number of objects in the case the cardinality is higher than 1.

The static object type is a piece of information indicative of the object type among the predetermined set of objects types that the connector is intended for. The predetermined set of objects types may comprise generic object types to manage the case where a same operator is intended for different possible specific object types.

The static cardinality value and static object type thus do not depend on the specific use of the connector in the 2D block representation under design.

Thus, in addition to such static values, every connector (input or output) of the 2D bock representation may have a use (e.g., dynamic) cardinality value and a use (e.g., dynamic) object type, also referred to as "inner" cardinality/type or "evaluated" cardinality/type, as opposed to the "pre-defined" (also referred to as "defined") cardinality/type. The use or dynamic object cardinality and the use or dynamic object type are information depending on the current structure of the 2D block representation under design, and they may for example be computed upon need from the 2D block representation, or alternatively, they may be computed and stored in a volatile manner e.g., on volatile memory, such as RAM (such that they are readily readable upon need throughout the design session, but updated upon a modification of the 2D block representation that impacts the values).

The use or dynamic cardinality value is a value depending on the effective object cardinality of the connector, in the current 2D block representation as it is instantiated. The use or dynamic cardinality value may correspond to (i.e., defined in the same domain as) the static cardinality value. It may thus optionally be a binary value indicative of whether the use or dynamic cardinality is 1 or higher than 1.

As explained earlier, a connector having a static cardinality value indicative that the connector expects a collection (e.g., "points" input connector of a spline operator block node, or the integer-list output connector of a sequence operator block node) may have a different use cardinality value. For example, the integer-list output connector may output a single integer if the input/parameter of the sequence operator block node indicative of the number of integers to be outputted has been set to 1. In such a case, the sequence operator block node may have been used at "under capacity", but this may be allowed by the data flow engine. Conversely, the data flow engine may forbid (prevent and/or output an alert) the spline operator being inputted with a unique point in its point-list input connector. Thus, when the cardinality value is a binary value, the use cardinality value is not dynamic as it is always equal to the static cardinality value, i.e. the value indicative that the use cardinality is higher than 1.

The use or dynamic object type is a piece of information indicative of the object type among the predetermined set of objects types that the connector is flowed with. For an output connector of at least one geometric block node and optionally also for an output connector of at least one non-geometric block node, the output of the operator has an object type which is dynamic, meaning that it is variable depending on the current instance of the 2D block representation. In particular, at least one input of the respective operator may have a dynamic object type, such that the corresponding input connector of the respective block node may be fed with objects of different types. The object type at the output connector (i.e., the type of objects outputted at said connector) may then depend on and vary as a function of said input object type.

For example, the predetermined set of operators may comprise one or more transformation operators, one or more extraction operators, and/or one or more list assembly operators. Such operators are operators that do not affect the type of their input, and are rather directed at manipulating them in a type-conserving manner. Such operators may be authorized to be inputted with different object types, since their operations do not depend on the input object type. The predetermined set of operators may for example comprise any one or any combination of the following operators: a translation operator, which translates a geometric object, a rotate operator which rotates a geometric object, a scale operator, which scales a geometric object, an assemble operator, which assembles for example geometric objects together, a sub-elements operator, which extracts sub-parts of an object, a boundary operator, which extracts a boundary of a geometric object (e.g., a boundary curve in case the object is a surface, or a boundary surface in case the object is a volume), and/or a build-list (or create-list) operator, which builds a list out of a plurality of input objects. Such operator block nodes may each have a dynamic input connector and, correspondingly, dynamic output connector. The object type of the output connector may vary depending on the object type of the input connector, which accepts different object types.

Conversely, the predetermined set of operators may comprise one or more geometric operators which do not output any dynamic object type. For such operators, the use/inner object type of the output connector is necessarily the same as the static/defined object type of the output connector. This is the case in particular for geometric operators which generate geometry from scratch. The predetermined set of operators may for example comprise any one or any combination of the following geometry-generating operators: one or more point-generating operators (such as the point-by-coordinate operator), which necessarily output points, a circlegenerating operator, one or more curve-generating operators, a line-generating operator, a sphere-generating operator, a plane-generating operator, a meshgenerating operator, a spline-generating operator (as presented earlier), and/or a polyline-generating operator (as presented earlier). The output in such cases is necessarily a constant one among the predetermined set of object types, for example a geometric point object type, a geometric line object type, or a geometric plane object type.

As the 2D block representation may comprise at least one input connector corresponding to an input having a dynamic object type, the predetermined set of object types comprises one or more first object types that are compatible each to one or more second object types. A first object type being compatible to a second object type means that an input connector having the second object type as its static object type, may also accept input data of the first object type. The compatibility relationship is not necessarily symmetric.

For example, the translation operator may expect as an input to be translated an object of a generic geometrical-object (or geometry) type, but the operator may be inputted with objects of a more specific type, such as objects of a geometric-curve type. The translation operator may indeed translate curves with no issue. As another example, the point-by-coordinate operator may have as a static object type for its x, y and z input connectors a length type, but each of these input connectors may accept objects of a real type (i.e., real numbers) or objects of an integer type (i.e., integer numbers), and such input objects may be interpreted as a length, equal to the input value assigned with a predetermined length unit, such as the meter or millimeter unit.

The predetermined set of object types may form a tree of object types, the tree being for example connected and/or having only one single root node. Thus, the object types are all organized according to parent-child relationships in one tree structure, a child type being a specific sub-type of its direct parent type. In other words, the parent type is more generic / encompasses its child type. An object of the child type thus presents all attributes of an object of the parent type, such that an object of the child type may be used as such (i.e., with no conversion) in an operation expecting the parent type. Each non-leaf object type in such a case is dynamic, meaning that connectors having said non-leaf object type as their static object type have a dynamic object type. In particular, each descendant (child or descendent of child, such as grandchild) object type of said non-leaf object type is compatible to said non-leaf object type. This is the case for example for the translation operator as explained above, as the curve object type may be a descendent (e.g., a child) of the geometry object type. Such a compatibility allows to use operators accepting generic object types depending on the situation, for example geometric operators that do not affect type such as those presented above.

In a tree, a parent node of a given node is a node from which an arc originates and arrives at the given node (the arcs being all directed). A descendent node (e.g., child) of a given node is a node for which a continuous path of one or more arcs originates from the given node and arrives at the descendant node.

The predetermined set (e.g., tree) of object types may comprise any one or any combination (e.g., all) of the following list of types:
- a generic or undefined (e.g., root) type, and optionally the predetermined set of operators may comprise one or more operators having the generic type as their static object type, for example a create-list operator;
- (e.g., having the root type has a parent or ascendant,) a literal type, a geometry or geometrical object type, and a matrix type,
- (e.g., having the literal type has a parent or ascendant,) a real type, a string type, and a Boolean type
- (e.g., having the geometry type has a parent or ascendant,) a point type, a curve type, a surface type, and a volume type,
- (e.g., having the matrix type has a parent or ascendant,) a vector type,
- (e.g., having real root type has a parent or ascendant,) an integer type and a magnitude type, the magnitude type having as children a length type and an angle type,
- (e.g., having the curve type has a parent or ascendant,) a line type, and
- (e.g., having the surface type has a parent or ascendant,) a plane type.

At least a portion of the tree may thus consist of the following structure of object types, where the indentation represents parent-child relationships:
- Undefined/root/generic
   ∘ Literal
      ▪ Real
         - Integer
         - Magnitude
            ∘ Length
            ∘ Angle
      ▪ String
      ▪ Boolean
   ∘ Geometry/ geometrical object
      ▪ Point
      ▪ Curve
         - Line
      ▪ Surface
         - Plane
      ▪ Volume
   ∘ Matrix
      ▪ Vector

The 2D block representation displayed at S10 may comprise, for each respective type of the any one or any combination (e.g., all) of the list of types, at least one connector of which static/defined type is the respective type.

Additionally or alternatively, when the predetermined set of types is a tree, the 2D block representation may comprise, for each respective leaf type of the any one or any combination (e.g., all) of the list of types, at least one connector of which use/inner type is the respective type.

In addition or alternatively, the predetermined set of object types (e.g., tree) may comprise one or more first object types each convertible into one or more respective second object types. Each such first object type convertible into a respective second object type may be different from and not a child or descendant of said respective second object type. The first object type may however possibly be an ascendant (i.e., parent or ancestor) of the second object type. By "convertible", it is meant that the computer system / application / data flow engine comprises a respective conversion algorithm configured for turning/converting each such first object type into such a respective second object type. Thus, the algorithm/conversion may be executed each time an object of the first object type is inputted to an input connector expecting (having as static object type) an object of the second object type. As a result, each first object type convertible into a respective second object type is thereby compatible to said respective second object type. This is the case for example of the integer object type or the real object type, which may both be converted into the length object type. As mentioned above, the predetermined algorithm may in such a case consist in taking the input integer or real value as is, and assigning said value with a predetermined length unit. Such a compatibility allows flexibility to the user, who is not bound to have exact type matching or descendance when creating arcs between connectors. This may prove extremely ergonomic, as the predetermined set of object types may comprise more than 10, 50 or 100 different object types, making it difficult for the user to always select the one and only object type that would be authorized whichever the situation.

By convention, the dynamic object type of a collection of objects of different object types is the closest ascendent object type in the tree which is common to all object types of the collection.

The system (e.g., data flow engine) may for example support any one or any combination (e.g., all) of the following list of convertibility rules:
- the real type is convertible into the integer type (e.g., by using a floor or ceiling function), into the length type (e.g., by adding a unit, which may be systematically the meter unit), and/or into the angle type (e.g., by adding the radian unit),
- the integer type is convertible into the length type (e.g., by adding a unit, which may be systematically the meter unit or the millimeter unit), and/or into the angle type (e.g., by adding the radian unit),
- the Boolean type is convertible into the integer type (e.g., True is converted into 1 and False is converted into 0),
- the point type is convertible into the vector type (e.g., the coordinates of a point become as is the coordinates of the vector),
- the curve type is convertible into the plane type, optionally only if the curve is planar, otherwise an error is outputted (e.g., taking the plane or any plane containing curve),
- the line type is convertible into the vector type (e.g., by taking a unit vector direct along the line),
- the plane type is convertible into the vector type (e.g., by taking a unit vector normal to the plane), into the line type (e.g., by taking an infinite line normal to the plane), and into the matrix type (e.g., by considering a 4x4 transformation matrix, the geometries - including the planes - being oriented, with a first column of the matrix representing an X direction of the plane, a second column representing a Y direction of the plane, a third column representing a Z direction of the plane, and a fourth column representing a position of an origin O of the plane; such a conversion can serve to express a change of frame in a facilitated manner), and/or
- the volume type is convertible into the surface type (e.g., by taking a boundary surface of a volume).

The 2D block representation displayed at S10 may comprise at least one occurrence of each convertibility of the list (i.e., at least once, an object is converted according to each rule at an input connector).

The system/application/engine may be configured such that a first object type is compatible to a second object type only if the first object type is a descendant of the second object type or the first object type is convertible into the second object type. Otherwise, and if the first object type is not identical to the second object type, the system may output an error, indicative of an incompatibility. This puts a constraint on the design, avoiding ambiguities.

Still referring to FIG. 1, the designing method comprises, after and/or while the displaying S10, by a user interacting graphically with the 2D block representation, for example as discussed above, performing S20 a selection of one or more block nodes among the at least one geometric block node. The case of geometric design is here discussed, where the user is shaping the final product to be manufactured, although the same type of user-interaction may be supported for non-geometric design.

The selection performed at S20 may comprise the user graphically acting on one or more block nodes, possibly at locations other than the connectors displayed on the block nodes, thereby directly selecting the one or more block nodes. Alternatively, the selection performed at S20 may comprise the user graphically acting on an output connector of each of the one or more block nodes, for example the user clicking or touching the one or more output connectors, for example one after the other. The system may then interpret such action as a selection of one respective block node, for each selected output connector. The system may optionally support both alternatives. In examples, the designing method is repeated, including at least once implementing the first alternative and at least once implementing the second alternative.

The designing method then comprises a user-action S60 in order, mostly, to not only add a new block node representing a respective operator of the subset (i.e., a geometric block node), but also automatically connect the new block node to the one or more block nodes which were already present in the 2D block representation and were selected at S20.

In specific, the designing method comprises, upon the user-action S60, adding S70 to the 2D block representation a block node representing a respective geometric operator of the subset, thus instantiating the selected operator.

The designing method also comprises automatically determining S85 a respective arc between the output connector of each selected block node and a respective input connector of the added block node, and adding S90 to the 2D block representation each determined arc, thereby connecting the output connector of each block node selected at S20 to an automatically-determined respective input connector of the new block node added at S70.

The one or more block nodes selected at S20 may optionally each have one, and only one, output connector. However, in case a given block node selected at S20 has several output connectors, the designing method may connect only one output connector of the given block node via the functionality of FIG. 1. The expression "the output connector" used for the connected output connector may designate any (predetermined or variable) output connector of the given block node (e.g., determined automatically among the several output connectors of the block node as part of the automatic determination S85, for example as one (e.g., the) output connector that achieves arc combination compatibility and/or minimizes a predetermined incompatibility metric, as discussed later), or alternatively a (predetermined) selected output connector (e.g., in case the given block was selected at S20 indirectly by selecting said selected output connector), or yet alternatively the (predetermined) main output connector of the given block node. The designing method may implement any option.

Thus, the designing method automatically determines, at S85, a combination of arcs so as to connect the output connector of each block node selected at S20 to a respective input connector of the new block node. Thus, the designing method instantiates at S85 data representative of such a combination of arcs, without the user defining said arcs.

The automatic determination S85 may comprise computing such arc combination, or alternatively retrieving a pre-computed arc combination. In particular, the respective arc between the output connector of each block node selected at S20 and a respective input connector of the block node added at S70 may be pre-computed information when the adding S70 is performed. For example, the system may automatically compute arc combinations as soon as the user performs the selection at S20, for example by automatically browsing the predetermined set of operators and executing an arc combination computation algorithm for each operator of the predetermined set of operators or of a browsed subset thereof. In such a case, for at least one operator, at least one arc combination that comprises the respective arc between the output connector of each block node selected at S20 and a respective input connector of the block node added at S70 is effectively outputted (the arc combination computation algorithm being optionally configured not to output any arc combination, or to output other types of arc combinations depending on the operator and the selection S20, as discussed later). Such precomputation allows higher real-time behavior at S85. It further allows navigation among different results, as explained later.

The designing method then comprises adding S90 to the 2D block representation each computed arc, thus instantiating a respective arc between the (e.g., any, main, or selected) output connector of each block node selected at S20 and a respective input connector of the block node added at S70, thereby obtaining at S90 an updated 2D block representation. Such addition of arcs at S90 may be performed automatically/real-time and seamlessly upon the addition of the block node at S70 and/or the computing S85.

The determining S85 and/or adding S90 may be performed after the adding 70, for example automatically/real-time and seamlessly upon the adding S70 being completed or triggered. The determining S85 and/or adding S90 may be confounded/simultaneous and seamless with the adding S70.

The designing method then comprises updating S100 the display of the 2D block representation, at least by displaying the block node added at S70 and each arc added at S90. The updating S100 of the display may be performed automatically/real-time and seamlessly upon the adding S70 and/or the computing S85 and/or the adding S90 being complete. Thus, the updating S100 of the display may be confounded/simultaneous and seamless with the adding S70 and/or the computing S85 and/or the adding S90.

The designing method may comprise, optionally automatically/real-time and seamlessly upon the updating S100 being complete, executing S110 the data flow represented by the arcs of the 2D block representation as updated at S100, thereby outputting an updated 3D shape representation, and displaying S120 the updated 3D shape representation, simultaneously to the displayed updated 2D block representation. The designing method thus allows an eventual update of the 3D shape representation at S120, which provides a visual feedback to the user of the edition conducted via S20 and S60.

The arc combination determined at S85 may be a compatible arc combination, meaning that for each arc of the arc combination, wherein the arc connects a respective output connector of a block node selected at S20 to a respective input connector of the block node added at S70, an object type of the respective output connector is identical to or compatible to an object type of the input connector. In such assessment of identity/compatibility, the considered object type of the respective output connector is the object type set by the current status of the 2D block representation (as displayed at S10), that is, the use/dynamic object type of the respective output connector if available (i.e., the output connector is evaluated, for example because its block node is receiving evaluated input), otherwise the defined/static object type of the respective output connector. In other words, if an object or a collection of objects effectively flows out of the output connector, the (e.g., dynamic) object type of said object or collection of objects is considered, otherwise the static object type is considered. This can make a difference for object types that are dynamic (i.e., the use object type can be different from the static object type). In turn, the considered object type of the respective input connector is the defined/static object type of the respective input connector, since its block node is added at S70 and yet to be connected, thus not evaluated.

The computing of the arc combination performed at S85 or the pre-computing performed prior to S70 (and of which result is retrieved at S85) may in examples comprise determining a set of one or more (e.g., all of, or a predetermined number of) compatible arc combinations comprising a respective arc between the output connector of each selected block node and a respective input connector of the block node added at S70 orto be added at 70, the arc combination determined at S85 being one among said set of one or more compatible arc combinations.

At S100, the designing method may comprise displaying, next to the added block node, a widget to navigate between different arc combinations, for example via a single click to change the currently displayed arc combination. The user may use said widget to re-execute the determining S85, adding S90 and updating S100, with a different arc combination than the one initially determined by the method, for example sequentially browsing (e.g., forward or backward, the system optionally supporting both directions) a list of possible arc combinations (offered to the user). The list of possible arc combinations may be among the set of one or more compatible arc combinations, for example equal to said set, wherein the set may optionally be the set of all compatible arc combinations comprising a respective arc between the output connector of each selected block node and a respective input connector of the block node added at S70 or to be added at 70.

The method may have computed or retrieved such a list of possible arc combinations at S85 (e.g., as the list of possible arc combinations may have optionally been pre-computed, for example as soon as performing the selection at S20).

The method may further comprise displaying a visual cue indicating a location in the navigation/list, including a total number of possibilities (i.e., the size of the list of possible arc combinations). The visual cue may be of the form " *k* / *K"* or any equivalent where *k* and *K* appear in any format (such as *"k* of *K"*), where *K* is an integer indicating the total number of arc combinations in the list, and k is an integer from 1 to *K* indicating the current selection within the list. *K* may thus optionally be equal to the number of elements in (i.e., size/cardinality of) the set of all compatible arc combinations comprising a respective arc between the output connector of each selected block node and a respective input connector of the block node added at S70 or to be added at 70.

Such visual tools allow the user to effectively interact with the automatism provided by the designing method, so as to correct automatic suggestions ergonomically, whereby the re-execution of the update S100, the data flow execution/compiling S110 and the displaying S120 provide a visual feedback to the user.

The arc combination determined at S85 may in examples be determined based on a predetermined incompatibility metric, which measures a level/degree of incompatibility of an arc combination, or inversely measures a level/degree of compatibility of the arc combination. The arc combination determined at S85 may in particular be, among all arc combinations, one (e.g., the) arc combination for which the predetermined incompatibility metric has the lowest value (e.g., wherein in case several such arc combinations exist, the arc combination determined at S85 may be selected among them in any manner). By extension, the value of the predetermined incompatibility metric between a set of one or more block nodes and an operator is the lowest value of the predetermined incompatibility metric among all arc combinations connecting the output connector of each block node of the set to a respective input connector of a block node representing the operator, when there is at least one such an arc combination.

The list of possible arc combinations may comprise a number (e.g., all) of the set of all compatible arc combinations, which may be ordered in the list according to a decreasing rank, from the lowest to the highest value of the incompatibility metric. Said number may be a number of those having the lowest values of the predetermined incompatibility metric. The number may be predetermined and/or be higher than 2 or 3, and/or lower than 10 or 8, for example equal to 4, 5, 6 or 7.

In the example where the system automatically computes arc combinations as soon as the user performs the selection at S20, for example by automatically browsing the predetermined set of operators, and executing an arc combination computation algorithm for each operator of the predetermined set of operators or of a browsed subset thereof, the system may constitute a map (e.g., including executing the arc combination computation algorithm on one or more operators), and the system may further store said map in a volatile manner, for reading access, e.g., on volatile memory such as RAM.

The map may comprise all operators for which a compatible arc combination exists (and that may each be referred to as "compatible operator", as compatible to the selection S20), and associated to each such operator, a set of one or more (e.g., all of, or a predetermined number of) compatible arc combinations comprising a respective arc between the output connector of each selected block node and a respective input connector of the operator. The set may be ordered as the above list, that is, according to a decreasing rank, from the lowest to the highest value of the incompatibility metric.

The map may optionally further comprise at least part (e.g., all) other operators (those for which a compatible arc combination does not exist), such that the map actually comprises more than the compatible operators (e.g., all operators) of the predetermined set of operators. Associated to each such other operator, the map may comprise a set of one or more (e.g., all of, or a predetermined number of) compatible arc combinations comprising a respective arc between the output connector of each of a subset of highest cardinality of the operator (corresponding to operators that may be referred to as "pseudo-compatible" operators), or a *null* value if such a set does not exist at all (because no output connector selected at S20 is identical to nor compatible to any input connector of the operator, e.g., the operator being referred to as "fully incompatible" operator).

By "highest cardinality", it is meant that, in case a plurality of block nodes is selected at S20, the arc combination computation algorithm may include recursively considering subsets of the selection of block nodes performed at S20, whereby at each recursion only one block node of the selection is deleted, and all potential deletions are considered for the subsets, and trying to find compatible arc combinations at each recursion. For example, suppose that five block nodes are selected at S20 (e.g., each having one, and only one, output connector), and for a given operator no compatible arc combination exists. Then, compatible arc combinations between subsets of four of the block nodes and the given operator may be searched. If found, the recursion may stop and output one or more (e.g., all of or a predetermined number of) such compatible arc combinations. Otherwise, the arc combination computation algorithm may continue and consider subsets of three block nodes. And so on. Because of the stop condition, the highest possible cardinality is achieved.

The one or more block nodes selected at S20, their output connectors considered at S85, and the block node added at S70, may be such that there is at least one compatible arc combination comprising a respective arc between the considered output connector of each selected block node and a respective input connector of the block node added at S70 or to be added at 70, so that it can be determined at S85. But the method may optionally execute an arc combination computation algorithm as above, that may be configured to handle the alternative scenario, that is, when a starting plurality of block nodes cannot be connected to a new block node with a compatible arc combination. Operators that are compatible to only a subset of the selection S20 may thus also be identified in the predetermined set of operators, seeking each time the highest cardinality, and their compatible arc combinations may be prepared and/or their value of the incompatibility metric may be computed, such that these information are ready for later use.

The user-action S60 may comprise any user-action triggering the automatic addition and connection of a new block node. Examples are now discussed, which greatly improve ergonomics to select and add a block node for the user, such improvement being particularly beneficial since the set of predetermined operators may comprise more than 50, 100 or 200 operators.

In an example, after the selection S20, the user-action S60 may comprise triggering display of a menu which allows to select the respective operator of which a block node is added at S70. The addition S70 may then comprises the user graphically selecting a graphical representation of the respective operator in the menu, for example by clicking or touching thereon, optionally among a (e.g., scrollable) set or list of graphical representations of several operators. This may trigger instantiation of the respective operator and automatic and seamless instantiation of the arc combination determined at S85.

In an example, when the user selects the respective operator, the system may compute at S85 the arc combination to be added at S90. Alternatively, the computation of the arc combination has already been performed, such that when the user selects the respective operator, the system only retrieves the arc combination to be added at S90, for example the first-ranked arc combination in the map, e.g., the arc combination having the lowest value of the predetermined incompatibility metric (said value being finite and/or the arc combination's cardinality being equal to the cardinality of the selection S20).

Additionally or alternatively, the menu may provide an automatic suggestion of several operators of the subset based on the lowest value of the incompatibility metric computed per operator. This may for example apply to the case where arc combinations are pre-computed. In such a case, when the user-action S60 triggers display of a menu, operators may be automatically suggested ranked according to their level of compatibility with the selection S20 (said level of compatibility being represented by the lowest value of the incompatibility metric computed per operator across all arc combinations). In particular, the automatic suggestion may rank operators starting from the most compatible to the least compatible, and present them to the user in that order. The automatic suggestion may comprise a subset of the predetermined set of operators, for example one or more (e.g., all) operators compatible with the whole selection S20 (i.e., there exists a compatible arc combination with an arc from each output connector of the selection S20 to a respective input connector of the operator).

Optionally, the several operators of the automatic suggestion may further comprise pseudo-compatible operators. To handle such a case, the ranking may be performed according to a lexicographic order, where first the cardinality of the potential compatible arc combination is ranked, from operators compatible with the whole selection S20 ranked first (e.g., where at least one such operator exists), and then decreasing as the cardinality of the subset of the selection S20 decreases oneby-one, and then the value of the incompatibility metric is ranked, in increasing order. In other words, the system automatically suggests, to the extent this possible, operators that can be connected to all the selected block nodes, and then those that have the highest level of compatibility first. Such ranking can handle the case of a selection in place of the one at S20 for which there would be no compatible operator at all in the predetermined set of operators, such that only pseudo-compatible operators are suggested.

Optionally, the menu may comprise a search bar to perform a semantic search, and the user may enter text to search for the name of an operator to be added at S90. Hits may be computed and displayed (e.g., via a graphical representation of the respective operator) real-time while the user is entering text. A hit may be displayed if the name of the operator contains the text being entered (e.g., with or without approximate matching).

Such option may be combined with the automatic suggestion option, such that the text search is performed within the ranking performed by the automatic suggestion, or the automatic suggestion is performed among the current hits of the name search. In other words, the automatic suggestion is based on the lowest value of an incompatibility metric computed per operator matching the semantic search. The semantic search may result in filtering results that match the searched text among the automatic suggestion.

In another example, the user-action S60 may consist of triggering a functionality to automatically select an operator and add at S70 a block node.

This may be an operator predicted according to the designing method of European patent application No. 23306920.2 filed on 7 November 2023, on behalf of the same applicant and with the same inventors, which is incorporated herein by reference, and in particular by a machine-learning function as taught in that document.

The designing method may thus comprise, as taught in said European patent application, after the selection at S20 of one or more block nodes and the respective output connector(s), and referring to FIG. 1 of said document:
- by the computer system, using a pre-trained machine-learning function:
   ▪ providing S30 to the machine-learning function, for each respective selected output connector (the output connector of a block node selected at S20), input data including at least:
      ∘ the data identifier of the respective operator represented by the block node of the respective selected connector,
      ∘ the data identifier of the respective selected connector,
      ∘ an object type of the respective selected connector,
   ▪ outputting S40, by the machine-learning function, a prediction of one or more operators among the predetermined set of operators;
- by the computer system, displaying S50 a graphical representation of at least one operator of the prediction, for example in the displayed menu
- by the user, selecting S60 an operator among the at least one operator of the prediction, thereby adding S70 a block node to the 2D block representation (the user-action S60 of the present disclosure thus consisting of the userselecting S60 in that document).

As taught in as taught in said European patent application:
- the input data of the machine-learning function may further comprise, for each respective selected connector, a value depending on an object cardinality of the respective selected connector;
- the value depending on the object cardinality of the respective selected connector may be a binary value indicative of whether the cardinality is 1 or higher than 1;
- the selected one or more connectors at S20 may consist either of one output connector, or of several output connectors;
- the use of a pre-trained machine-learning function may comprise the selection of a respective specialized machine-learning function depending on whether the selected one or more connectors consist of one output connector, or of several output connectors;
- the machine-learning function may be a multilayer perceptron;
- the prediction may comprise several operators ranked by probability, and optionally said several operators may be displayed in the menu instead of the most probable operator being automatically instantiated at S70; and/or
- the pre-trained machine-learning function may be obtained by a training method, which may form a machine-learning process with the designing method.

Examples of the incompatibility metric that were observed to achieve accurate results are now discussed.

In case the set of object types is a tree with descendant types being compatible to their ascendant types, the incompatibility metric (is any function that) penalizes, for a given arc combination, for each given arc for which the object type of the output connector of S20 is a descendant of the object type of the respective input connector of the added block node of S70, the tree distance between the object type of the output connector and the object type of the respective input connector. In other words, the farther on the tree the two object types are, the more the arc is penalized. This is because connecting a specific type to a generic type should be avoided as much as possible, when a match is available. This saves the generic type for other specific types that do not have such a match, thus optimizing the aid of the genericity and globally ensuring compatibility.

In case the system supports convertibility of one or more first object types into one or more respective second object types, the incompatibility metric may penalize, for a given arc combination, for each given arc for which the object type of the output connector is convertible into the object type of the respective input connector of the added block node, occurrence of the given arc. In other words, the occurrence of a conversion is penalized. This is because conversions are design shortcuts that are not used on a usual basis, such that when desiring to add a new block node, input block nodes were specifically prepared with such objective and are thus likely to present object types not requiring such conversion.

In particular, the incompatibility metric may penalize said occurrence to a higher extent than the tree distance penalization. For example, the one occurrence may be penalized more than 100 times, 200 times, or 500 times, for example about 1000 times, a tree distance of 1. By "about a certain value" it is meant the value +/-10%. In other words, the penalty attributed to an occurrence of a conversion is more than 100 times, 200 times, or 500 times, for example about 1000 times, the penalty attributed to a tree distance of 1. Optionally, the tree distance may be penalized linearly, e.g., proportionally. For example, a penalty of the tree distance may be equal to the tree distance. Thus, the automatic determination S85 avoids as much as possible conversions, and rather favors ascendance compatibility. Conversion is used only to achieve arc combination compatibility as a last resort. However, a higher cardinality of the arc combination involving a conversion is favored to a lower cardinality, this is because it is safe to consider that the user is not likely to have made a mistake at S20 and S70, such that the correct block nodes were added by the user.

In particular, the incompatibility metric may be equal, for a given arc combination, to a sum of a number of one or more penalties equal to the cardinality of the combination (i.e., the number of arcs in the arc combination, that is the number of block node(s) selected at S20 unless a compatible arc combination does not exist and subsets need to be considered). In such a case, each arc of the given arc combination provides a penalty in the sum. Such a summing balances penalties so as to provide an accurate result.

The per-arc penalty may be equal to zero if the two connected object types are identical. This is because this is an ideal situation.

The per-arc penalty may be equal to the tree distance between the object type of the output connector of the arc and the object type of the respective input connector of the added block node for the arc, when the arc is such that the object type of the output connector of S20 is the same as or a descendent of the object type of the respective input connector of the added block node of S70. The upper bound of the tree distance may be lower than 50, or 20, or 10 (i.e., the predetermined tree of object types having a depth equal to such upper bound value).

The per-arc penalty may be equal, for a conversion arc (i.e., the object type of the output connector is convertible into the object type of the respective input connector), to a value higher than 100, 200, or 500, for example equal to about 1000. In other words the penalization of one conversion is much higher than the penalization of the maximum possible tree distance.

The designing method may be repeated and interlaced with other designing steps in a designing phase, for example for the user to add block nodes and arcs in other manners, for example according to the standard graphical interaction design capabilities of the 3D block representation application, so as to eventually yield a complete and exact shape of the product to be manufactured. The 2D block representation and/or 3D shape representation may then be inputted to a manufacturing process, which may output one or more physical instances of the product to be manufactured with the exact same shape as the one eventually reached at the end of the designing phase. The designing method and/or machine-learning process may thus be included in a manufacturing process of the product to be manufactured (e.g., a mechanical part of an assembly of mechanical parts).

The designing method thus generally manipulates modeled objects, in particular the 2D block representation and the 3D shape representation. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (*e.g*. a CAD system or a CAD software), it is additionally meant any system, software or hardware, adapted at least for designing a modeled object on the basis of a graphical representation of the modeled object and/or on a structured representation thereof (*e.g*. a feature tree), such as CATIA. In this case, the data defining a modeled object comprise data allowing the representation of the modeled object. A CAD system may for example provide a 3D shape representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be the 3D modeled object, e.g. representing a product such as a part or an assembly of parts, or possibly an assembly of products. The 3D modeled object may be a manufacturing product, *i.e.* a product to be manufactured. By "3D modeled object", it is meant any object which is modeled by data allowing its 3D shape representation. A 3D shape representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D shape representation facilitates design (i.e. increases the speed at which designers statistically accomplish their task). This speeds up the manufacturing process in the industry, as the design of the products is part of the manufacturing process.

The 2D block representation and the corresponding 3D shape representation modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the designing method, or the designing method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the designing method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

The 3D shape representation may be a B-rep. The 3D shape of the part displayed on the screen of the computer when the modeled object is represented may be (e.g. a tessellation of) the B-rep.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA^{®}. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA^{®}. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict *e.g*. lower mass usually causes lower stiffness. Thus, optimization methods are often applied to find the best trade-off between the KPls.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA^{®}.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, the 3D modeled object is a virtual twin, also called digital twin, of an object to be manufactured with two objectives:
- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

The 3D modeled object outputted by the designing method may be a CAD model, for example comprising or consisting in a feature tree and/or a B-rep. Such a model may stem from a CAE model and may results from a CAE to CAD and 2D block representation conversion process, that the designing method may for example comprise at an initial stage.

The designing method may be included in a production process, which may comprise, after performing the designing method, producing a physical product corresponding to the 3D modeled object by the designing method. The production process may comprise the following steps:
- applying the designing method, thereby obtaining the 3D modeled object (CAD model) outputted by the designing method;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise the following steps:
- editing the obtained CAD model;
- performing simulation(s) based on the CAD model or on a corresponding CAE model (*e.g*. the CAE model from which the CAD model stems, after a CAE to CAD conversion process), such as simulations for validation of mechanical, use and/or manufacturing properties and/or constraints *(e.g.* structural simulations, thermodynamics simulation, aerodynamic simulations);
- editing the CAD model based on the results of the simulation(s);
- optionally (*i.e*. depending on the manufacturing process used, the production of the mechanical product may or may not comprise this step), (*e.g*. automatically) determining a manufacturing file/CAM file based on the (*e.g*. edited) CAD model, for production/manufacturing of the manufacturing product;
- sending the CAD file and/or the manufacturing file/CAM file to a factory; and/or
- *(e.g.* automatically) producing/manufacturing, based on the determined manufacturing file/CAM file or on the CAD model, the mechanical product originally represented by the model outputted by the designing method. This may include feeding (*e.g*. automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e.g*. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the designing method improves the design of a model (CAE or CAD) representing the part/product, the manufacturing and its productivity are also improved.

Editing the CAD model may comprise, by a user (*i.e.* a designer), performing one or more editions of the CAD model, *e.g*. by using a CAD solution. The modifications of the CAD model may include one or more modifications each of a geometry and/or of a parameter of the CAD model. The modifications may include any modification or series of modifications performed on a feature tree of the model (*e.g*. modification of feature parameters and/or specifications) and/or modifications performed on a displayed representation of the CAD model (*e.g*. a B-rep). The modifications are modifications which maintain the technical functionalities of the part/product, *i.e*. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g*. automatically) determining a production file from the CAD model (*e.g*. any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:
- Fusion 360,
- FreeCAD,
- CATIA,
- SOLIDWORKS,
- The NC Shop Floor programmer of Dassault Systèmes illustrated on https://my.3dexperience.3ds.com/welcome/fr/compassworld/rootroles/nc-shop-floor-programmer,
- The NC Mill-Turn Machine Programmer of Dassault Systèmes illustrated on https://my.3dexperience.3ds.com/welcome/fr/compassworld/rootroles/nc-mill-turn-machine-programmer, and/or
- The Powder Bed Machine Programmer of Dassault Systèmes illustrated on https://my.3dexperience.3ds.com/welcome/fr/compassworld/rootroles/powder-bed-machine-programmer.

The product/part may be an additive manufacturable part, *i.e.* a part to be manufactured by additive manufacturing (*i.e*. 3D printing). In this case, the production process does not comprise the step of determining the CAM file and directly proceeds to the producing/manufacturing step, by directly (*e.g*. and automatically) feeding a 3D printer with the CAD model. 3D printers are configured for, upon being fed with a CAD model representing a mechanical product (*e.g*. and upon launching, by a 3D printer operator, the 3D printing), directly and automatically 3D print the mechanical product in accordance with the CAD model. In other words, the 3D printer receive the CAD model, which is (*e.g*. automatically) fed to it, reads *(e.g.* automatically) the CAD model, and prints *(e.g.* automatically) the part by adding together material, e.g. layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g*. automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.* a part manufactured by machining), such as a milled part (*i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (*e.g*. automatically) checking if the CAD model has any geometric particularity (*e.g*. error or artefact) that may affect the production process and (*e.g*. automatically) correcting such particularities. For example, machining or milling based on the CAD model may not be carried out if the CAD model still comprises sharp edges (because the machining or milling tool cannot create sharp edges), and in such a case the determination of the CAM file may comprise *(e.g.* automatically) rounding or filleting such sharp edges *(e.g.* with a round or fillet radius that corresponds, *e.g*. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (*e.g*. rounding or filleting of geometries) may be carried out automatically as previously discussed, but also, by a user (*e.g*. a machining engineer), which performs the correction by hand on a CAD and/or CAM solution, *e.g*. the solution constraining the user to perform corrections that make the CAD model compliant with specifications of the tool used in the machining process.

Further to the check, the determination of the CAM file may comprise (*e.g*. automatically) determining the machining or milling path, *i.e*. the path to be taken by the machining tool to machine the product. The path may comprise a set of coordinates and/or a parameterized trajectory to be followed by the machining tool for machining, and determining the path may comprise (*e.g*. automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g*. that the tool continuously follows without breaking contact with the material to be cut. Alternatively, the path may be a concatenation of a sequence sub-paths to be followed in a certain order by the tool, *e.g*. each being continuously followed by the tool without breaking contact with the material to be cut. Optionally, the determination of the CAM file may then comprise (*e.g*. automatically) setting machine parameters, including cutting speed, cut/pierce height, and/or mold opening stroke, for example based on the determined path and on the specification of the machine. Optionally, the determination of the CAM file may then comprise (*e.g.* automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (*e.g.* directly and automatically) fed to the machining tool and/or the machining tool may then (*e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

The product/part may alternatively be a molded part, *i.e.* a part manufactured by molding (*e.g.* injection-molding). In such a case, the production process may comprise the step of determining the CAM file. This step may be carried out automatically, by any suitable CAM solution to automatically obtain a CAM file from a CAD model of a molded part. The determining of the CAM file may comprise (*e.g.* automatically) performing a sequence of molding checks based on the CAD model to check that the geometry and/or distribution of material captured by the CAD model is adapted for molding, and (*e.g.* automatically) performing the appropriate corrections if the CAD model is not adapted for molding. Performing the checks and the appropriate corrections (if any) may be carried out automatically, or, alternatively, by a user (*e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (*e.g.* automatically) determining a CAM file based on the CAD model. The CAD model represents the stamping part, *e.g.* possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e.g.* as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e.g.* directly and automatically, the CAM file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The computer system may comprise a processor coupled to a memory and a graphical user interface (GUI), the memory having recorded thereon a computer program comprising instructions for performing the training and/or designing method. The memory may also store a database. The memory is any hardware adapted for such storage, possibly comprising several physical distinct parts (e.g. one for the program, and possibly one for the database).

FIG. 2 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

An implementation is now discussed with reference to FIG.s 3-24.

The implementation offers a solution of intelligent suggestion of arc connections in an application of which particularity is to represent connections of operators in a form alike a graph, the 2D block representation. An example of such application is xGenerative Design, which is part of the CATIA portfolio and is a web application combining 3D and visual scripting modeling based on a 2D block representation.

FIG. 3 shows a screenshot of the interface of such a 2D block programming application.

Such an application can display simultaneously a 3D shape representation 300 of a 3D modeled object representing a manufacturing product (e.g., a folded alveolar sheet structure here), and a 2D block representation 310 of the 3D modeled objection. The 2D block representation 310 comprises block nodes 320 which may optionally be rectangles all parallel to the screen, input connectors 322 which may be dot shapes displayed on a left boundary side of a respective block node 320, output connectors 324 which may be dot shapes displayed on a right boundary side of a respective block node 320, and arcs 326 each connecting an output connector 324 of a first block node to one or more input connectors 322 each of another second block node 320. The application can also display menus and menu buttons 330 and widgets 340.

The application allows generative 3D modeling via a library or predetermined set of operators that may be instantiated. The operators are configured to handle geometrical operations (Point, Line, Curve, Surface, Extrude, Rotate, Mesh, etc.), mathematical ones (addition, division, etc.), list management, and so on.

The library may propose 500+ operators, and it may be growing. As a result, finding the appropriate operator at a specific design stage might be challenging to the user. The proposed solution optionally tackles the issue of discoverability. In addition, connecting a new operator to a selection of existing operators may be cumbersome, in particular in view of the numerous input connectors the new operator may have. The proposes solution tackles this issue of connectivity.

Referring to FIG. 4, an operator is a node in the virtual graph. The figure shows an instance of a point-by-coordinates node. On the left part of the figure, the node is not selected by the user, such that only its input connectors 322 and its output connector 324 are visible to the user. On the right part of the figure, the node has been selected, such that additional data fields 400, menus 410, and information 420 are displayed to the user. The right part of the figure shows the view of a node when it has been selected by the user (through a mouse click for instance) to allow the modification of the input values, the management of the node status, etc. An operator processes input data and provides output results through internal operations (geometrical transformations, mathematical equations, data structure management, etc.). In the example of FIG. 4, the "Point By Coordinates" operator/node takes three lengths as coordinates and, from them, builds a geometrical point (named "Point.1" here).

Referring to FIG. 5, nodes can be connected via arcs 326 through input and output connectors, thus forming the virtual graph. The figure indeed shows how the "pt" input connector of a "coordinates" block node is connected to the output of the Point by Coordinates operator. In this simple example, the user has connected the previous point to a "Coordinates" node to get the point coordinates. The "coordinates" forms an example of an operator with several outputs.

Referring to FIG. 6, the application may finely manage data types: the data in input connectors and transiting/flowing between nodes are typed to define their nature and ensure compatibilities (compliancy) between output and input connectors. The figure shows an example of a "line from two points" operator, thanks to which the user has generated a line using two points (line segment). To be able to do this, each input connector has a specific static object type to specify which kind of data can be connected thereto:
- pt1 and pt2 are of type *"GeometricPoint",* expecting geometrical points;
- st and end are optional extension lengths of the Line, beyond the two points; they are of type *"Length";*
- sup is an optional surface support for the Line, on which it can be drawn. It is of type *"GeometricSurface".*

Referring to FIG. 7, if a connection is incorrect regarding types, the node can be in an error state, and a visual alert can be displayed to the user. In this example, a Length is connected as the second point of the Line. The types "Length" and "GeometricPoint" being incompatible, the node is at "Error", and generation of the Line is not possible.

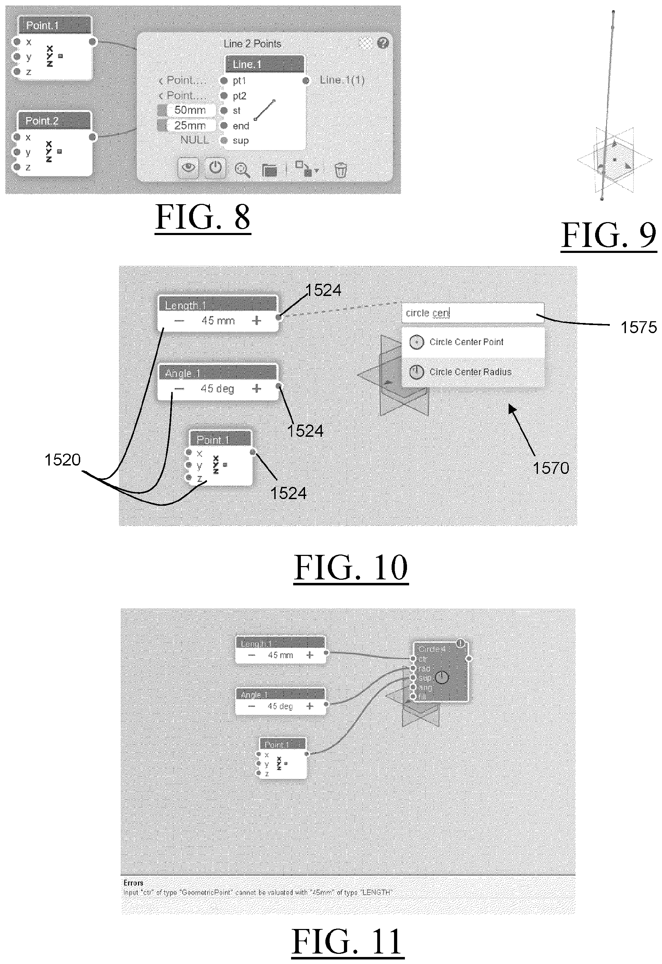

FIG.s 8-9 show an example of a generated Line with two points and two extension lengths, including the 2D block representation (or graph view) on FIG. 8, and the 3D shape representation (or 3D view) on FIG. 9.

Referring to FIG. 10, a user may select one or several block nodes 1520 (operators) at S20 and then search for a new operator to connect to the output connectors 1524 of the selection. In the illustrated example, three block nodes are selected, Length.1, Angle.1 and Point.1, each having one and only one output connector 1524, and the user is searching for a Circle block node to add to the 2D block representation at S70 and to connect to the selected block nodes. The user may at S60 trigger display of a menu 1570 to navigate into and select the respective operator to be added at S70. The menu 1570 may comprise a search bar 1575 for performing a semantic search in the menu. Here, the test "circle cen" is being entered by the user, for example using the keyboard after clicking on the search bar. Upon text entering by the user, the menu may real-time display results/hits, here "circle center point" and "circle center radius". The suggestion may be updated real-time as the user edits the semantic search.

The automatic suggestion may optionally be based on the lowest value of an incompatibility metric computed per operator matching the semantic search (i.e., text entered by the user). For example, only compatible operators or only compatible or pseudo-compatible operators may be suggested. Additionally or alternatively, suggested operators may be ranked by decreasing level of compatibility (i.e., increasing value of incompatibility metric).

As shown on FIG. 11, a block node Circle.4 has been added at S70. If the user manually were to connect the output connectors of the selection with (Length.1, Angle.1 and Point.1) in an inconsistent manner, as illustrated, the interface displays an error. This may notably often be the case if the user merely goes with the ordering of the selected blocked nodes and the input connectors of the Circle block node (e.g., vertical ordering from top to bottom, and/or ordering in the application, for example based on a natural ordering for the input connectors, and on a chronology of instantiating for the selected block nodes). By doing so, connector types compatibilities are ignored, potentially leading to errors. In this illustrated example, the "Point.1" node is connected to the Circle via the "sup" input connector, although said "sup" input connector expects a plane instead of a point. The node is thus in an Error state.

By automatically determining at S85 a respective arc between the output connector of each selected block node and a respective input connector of the added block node, the proposed solution prevents this type of manual connection errors, and it further handles the fact that multiple appropriate connections patterns may exist. In the context of a 2D block representation application, where many operators can exist, the proposed solution allows to determine which operators are compatible with the user selection at S20, what connections between the user selection and all the operators of the application are enabled, and what is the most probable connection between all possible connections.

From a set of user-selected block nodes, or output connectors of block nodes, in a user-designed 2D block representation, the proposed solution allows to suggest connection patterns between operators (block nodes) based on data type compatibilities between pairs of connectors. Such information is taken into account to make suggestions of automatic connections. The proposed solution thus overall accelerates the design process.

In the implementation, connections are automatically computed and added with the most compatible combination at first. The user may then optionally have the possibility to choose another pattern of connections from a ranked list of connection patterns, by navigating through them via an appropriate user Interface (e.g., previous or next), which is efficient and time saving.

The implementation is based on the concept of type penalty (e.g., non-symmetric distance from one object type to another), that acts as a metric to establish the distance between two object types A and B (note that the penalty is not a distance, since the penalty from A to B is not equal to the penalty from B to A). Such penalty "from A to B" then intervenes for each respective arc to be potentially computed at S85 and that connects an output connector of object type A to an input connector of object type B. The object type may in such a case be the use/inner/dynamic object type if available (i.e., if the object type can be evaluated), and otherwise the defined/static object type.

In the implementation, data/object types are hierarchical and can be organized as a tree, and convertibility is supported. In particular, the predetermined set of object types may be a tree which comprise any one or any combination (e.g., all) of the earlier-mentioned list of types, for example with at least a portion of the tree consisting of the earlier-mentioned structure of object types. In addition, the implementation may support any one or any combination (e.g., all) of the earlier-mentioned list of convertibility rules.

Mapping the hierarchy of types, the implementation may define the penalty from type A to type B with the following rules:
- The penalty is 0 (zero) when A is the same object type as B.
- The penalty is 1 when B is the parent of A (only one branch between the two types in the tree).
- The penalty is the tree distance D between A and B when B is an ascendent/ancestor of A (i.e., the number D of branches to form a path between the two types).
- The penalty between type A and B when A can be converted into B (jump to another branch) is e.g., 1000. Conversions between types are explicitly declared in the application.
- If through tree ascending and conversion, type B is unreachable from A, the penalty is Infinity.

With this definition, the implementation considers that two types A and B are compatible if the penalty AB is finite. If the penalty is Infinity, A and B are said incompatible. While a child type is always compatible to its parent type, a parent type is generally incompatible to a child type, unless a conversion exists from the parent to a child.

Referring to the earlier-mentioned structure of object types and to the earlier-mentioned list of convertibility rules, some examples of penalty computation are as follows:
- "Length" to "Literal": the path from "Length" to "Literal" is, through parenthood: Length > Magnitude > Real > Literal. Therefore, the penalty here is 3.
- "Boolean" to "Literal": a "Boolean" is convertible into a "Integer" (0 or 1). Then, we have: Integer > Real > Literal. The penalty here is : 1000 (conversion) + 2 (parenthood) = 1002.
- "GeometricPlane" to "Vector": a "GeometricPlane" is convertible into a "Vector" by considering the normal of the plane at its center. The penalty here is 1000.
- "Vector" to "GeometricPlane": the implementation does not support conversion of a vector into a unique plane, as the solutions are considered infinite by the implementation. There is thus no path starting from Vector to GeometricPlane, and the penalty is thus Infinity.

The penalty between two types is asymmetric/unidirectional: penalty AB is different than penalty BA in the data types set. Compatibility is then asymmetric too: A may be compatible to B, but B may be incompatible to A.

Type penalties AB and AC can be used to establish a "compatibility degree" between two types (B and C here) regarding a reference one (A) : if AC < AB (in term of distance), type C will be considered as "closest" to/more compatible with A than B is.

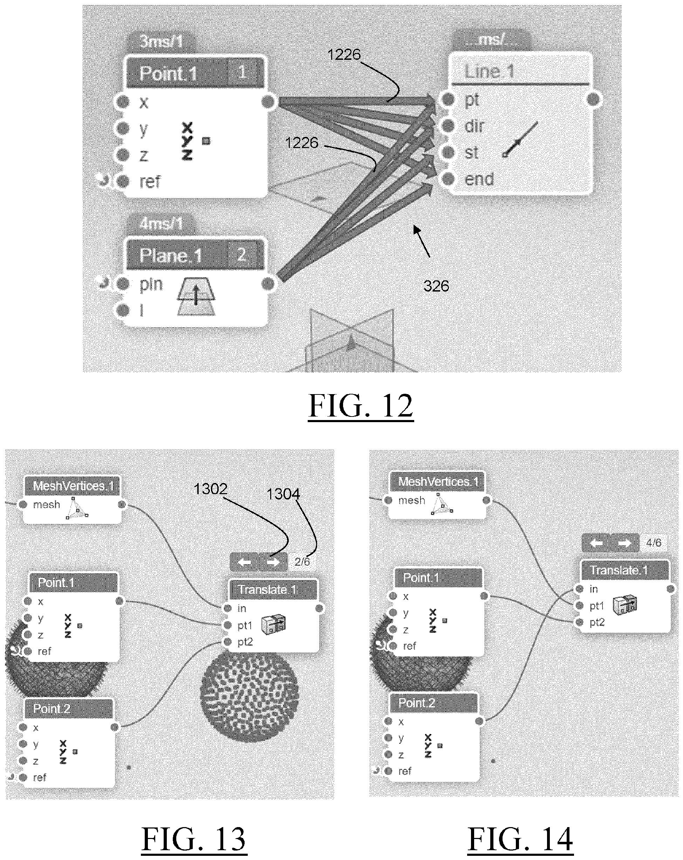

Referring to FIG. 12, a user may select at S20 one or several operators, e.g., Point.1 and Plane.1, and decide to search a new one to connect the selection to, Line.1 as shown in this example where the user is selecting a point and a plane to create a line.

In this example, the user has selected a Point and a Plane and created a Line node from this selection. The objective of the implementation is to connect the selection to the new block node as appropriately as possible, considering type compatibilities degrees (penalties).

In the example, among all arcs 326, only two arcs 1126 are associated with a finite penalty, such that only one combination of arcs has a finite incompatibility metric.

On a user selection of operators, the implementation may initialize a map containing every operator of the application. For each operator, the implementation may test if a connection pattern is possible between the user selection and the former. Then the implementation may store the resulting possible connections in the map, including for each operator, the name of the operator associated with a vector of all possible arc combinations.

For example, if one considers a user selection containing output connectors o1, o2 and o3 and an operator with input connectors i1, i2 and i3.

If o1 is compatible to i1 and i3 (finite distance of data types), this implies that the following process is implemented for combinations to be stored in the map as possible combinations:
Initialize:
- Combination 1: [i1]
- Combination 2: [i3]

Then if o2 is compatible with i2:
- Combination 1: [i1, i2]
- Combination 2: [i3, i2]

Now, if o3 is only compatible with i3:
- Combination 1: [i1, i2, i3]
- Combination 2: [i3, i2, i3]

In this case, one can see that i3 is present twice in combination 2, therefore this combination is not possible, because i3 is already connected to o1 (visible by its position in the list). Thus, the process removes combination 2, which leaves:
- Combination 1: [i1, i2, i3]

Given the fact that there is at least one possible connection pattern, the process can consider that the operator is compatible with the user selection.

Conversely, if o3 is only compatible with i2:
- Combination 1: [i1, i2, i2]
- Combination 2: [i3, i2, i2]

This implies that the two combinations are impossible, and therefore the process may consider the operator itself as being not compatible with the selection (no connections combination is possible).

Similarly, if o3 is not compatible with any of the operator inputs, this implies that it is not possible to create new connections, and therefore that this output cannot be connected, which may mean that the operator is not compatible with the user's selection.

Alternatively, the process may consider pseudo-compatibility and go back to the previous step, so as to store in the map:
- Combination 1: [i1, i2]
- Combination 2: [i3, i2]

In other words, the map stores compatible arc combinations between subsets of the output connectors, [o1, o2] in the example, of highest cardinality (2 in the example), and input connectors.

In such an alternative, the process may further search for compatible arc combinations for other subsets of output connectors of the highest cardinality, [o1, o3] and [o2, o3] here in the example, and store said arc combinations in the map.

If multiple connections combinations are possible, the implementation may at S85 automatically select the most compatible one by comparing the sum of all distances in each combination ("compatibility degree"). The map may however be available on RAM for user navigation within the stored combinations.

FIG.s 13-14 illustrate an example.

In this example, the user has selected two points and a "Mesh Vertices" node, providing the vertices of an input mesh. For "Mesh Vertices", the output is of type "MeshVertex" and can be directly converted into a "GeometricPoint".

The chosen operator is "Translate 2 Points":
- "in" is the geometry to translate, of type "GeometricObject" (any type of geometry).
- "pt1" and "pt2" are of type "GeometricPoint"

The connections illustrated on FIG. 13 have the priority over the connections illustrated on FIG. 14. The reason is now explained, computing the type penalities.

For the connections of FIG. 13:
- MeshVertices.1 is connected to "in": "MeshVertex" type is a sub type of "GeometricObject", with a penalty of 3 (MeshVertex > MeshElement > MeshBase > GeometricObject)
- "Point.1" and "Point.2" are connected to "pt1" and "pt2" of type GeometricPoint: being of identical type, both penalties are 0.

The total incompatibility metric A is 3 + 0 + 0 = 3.

For the connections of FIG. 14:
- MeshVertices.1 is connected to "pt1": "MeshVertex" type is convertible into "GeometricPoint", the penalty is then 1000.
- "Point.1" is connected to "pt2": distance here is 0 (same type "GeometricPoint")
- "Point.2" is connected to "in": "GeometricPoint" is a direct child of "GeometricObject", the penalty is then 1.

The total incompatibility metric B is 1000 + 0 + 1 = 1001.

Incompatibility metric A being inferior to incompatibility metric B (3 < 1001), the connections of FIG. 13 are displayed before the connections of FIG. 14.

The implementation may however display a widget 1302 to navigate between the different possible combinations. A visual cue 1304 may further indicate a location in the navigation, including a total number of possibilities (number 6 here).

The implementation may also extend to explicit operator search, as now discussed.

When the user starts typing words in the search field, the implementation may suggest the "closest" operators to the user selection by computing as an incompatibility metric a sum of data types penalties of arc combinations (between selected outputs and operators inputs) and ranking the operators in ascending order of the metric, as aforementioned.

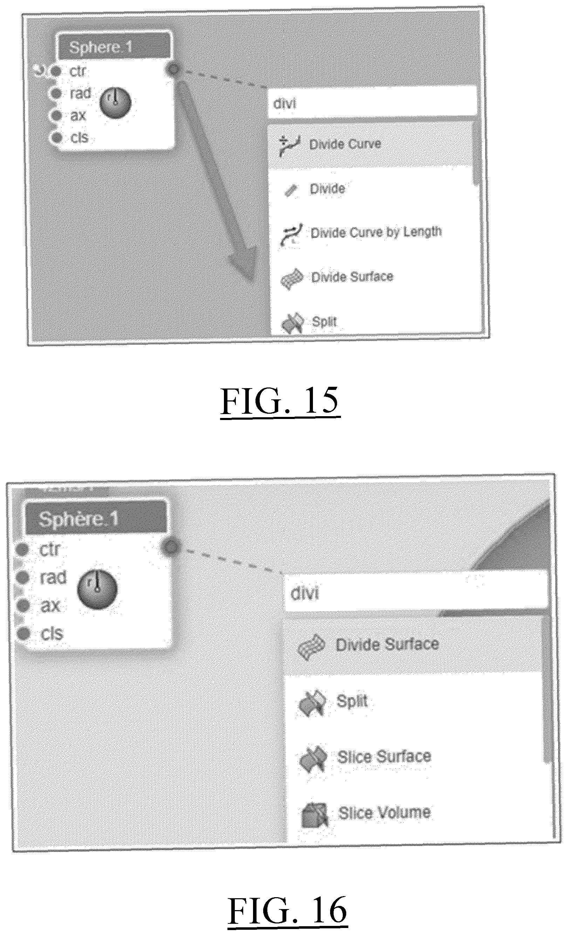

FIG. 15 shows for example a result of a search after selection of the output connector of a Sphere block node in the prior art. A sphere being a surface, "Divide Surface" should be the first proposed operator (distance of 0 between the two operators). The sphere is not compatible with a Divide Curve that expects a curve (infinite distance).

FIG. 16 shows the result of the same search in the implementation, that is, with the penalty computation and thus accordingly a filtering and/or re-ordering of the automatic suggestion based on said metric. One can see here the efficiency of the approach.

FIG.s 17-18 show another example when searching the same term "thick" with the implementation, but with different prior selections.

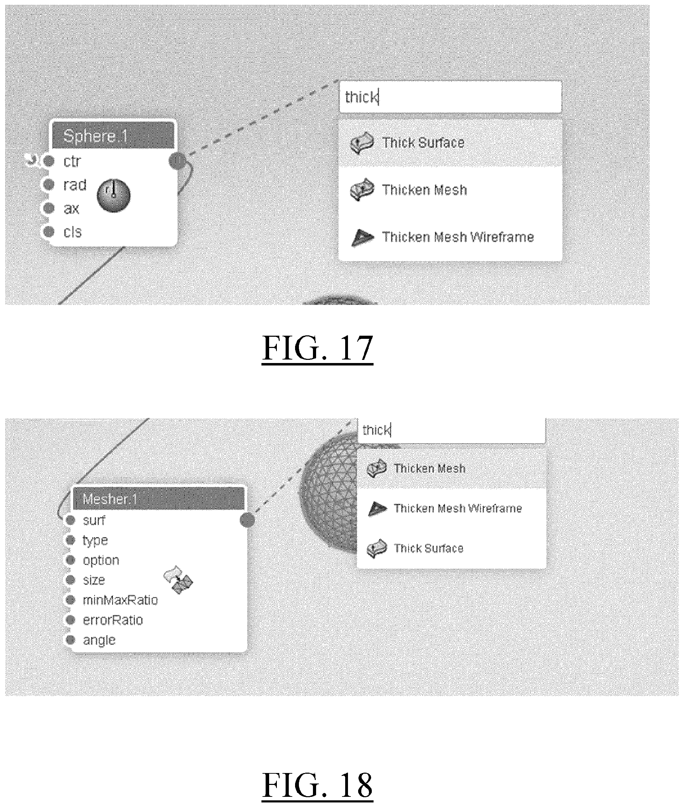

FIG.17 shows the result from a sphere. A sphere being a surface, "thick surface" is proposed first.

FIG. 18 shows the result from a "Mesher" node, producing a mesh geometry. Mesher outputting a mesh, the "Thicken Mesh" operator is more appropriate than the "Thick Surface".

One can see that the suggested operators are well adapted to the current user selection.

## Claims

1. A computer-implemented method for designing a 3D modeled object representing a product to be manufactured, the designing method comprising:
- by a computer system, displaying (S10) simultaneously:
▪ a 3D shape representation of the 3D modeled object, and
▪ a 2D block representation of the 3D modeled object, the 2D block representation comprising:
∘ block nodes, where:
each block node represents a respective operator among a predetermined set of operators, each operator of the predetermined set of operators having one or more inputs and an output, and
for at least a subset of operators among the predetermined set of operators, the output of each respective operator of the subset is a respective set of one or more geometrical objects, and:
• at least one block node represents an operator of the subset, and
• each input of each operator of the subset and the output of each operator of the subset each have a respective object type,
∘ one or more input connectors and an output connector on each respective block node, where:
each input connector represents a respective input of the respective operator represented by the respective block node, and
the output connector represents the output of the respective operator represented by the respective block node, and
∘ arcs each between the output connector of a first block node and a respective input connector of a second block node, where:
each arc represents data flow from the output connector of the first block node to the respective input connector of the second block node,
the 2D block representation being configured such that an execution of the data flow represented by the arcs of the 2D block representation outputs the 3D shape representation;
- by a user interacting graphically with the 2D block representation, performing (S20) a selection of one or more block nodes among the at least one block node;
- upon user-action (S60):
▪ adding (S70) to the 2D block representation a block node representing a respective operator of the subset;
▪ automatically determining (S85) a respective arc between the output connector of each selected block node and a respective input connector of the added block node;
▪ adding (S90) to the 2D block representation each determined arc;
▪ updating (S100) the display of the 2D block representation, at least by displaying the added block node and each added arc;
- executing (S110) the data flow represented by the arcs of the updated 2D block representation, thereby outputting an updated 3D shape representation; and
- displaying (S120) the updated 3D shape representation.

2. The designing method of claim 1, wherein:
- each respective object type is one among a predetermined tree of object types, where each non-leaf object type is dynamic, each descendant object type of said non-leaf object type being compatible to said non-leaf object type,
- the automatic determining (S85) comprises determining, among all arc combinations
∘ including a respective arc between the output connector of each selected block node and a respective input connector of the added block node,
∘ for which the object type of the output connector of each respective arc is identical to or compatible to the object type of the respective input connector of the added block node,
an arc combination for which a predetermined incompatibility metric has the lowest value,
- the incompatibility metric penalizes, for a given arc combination, for each given arc for which the object type of the output connector is a descendant of the object type of the respective input connector of the added block node, the tree distance between the object type of the output connector and the object type of the respective input connector.

3. The designing method of claim 2, wherein the incompatibility metric is equal, for a given arc combination, to a sum of a number of one or more penalties equal to the cardinality of the combination, each arc of the given arc combination providing a penalty in the sum equal to the tree distance between the object type of the output connector of the arc and the object type of the respective input connector of the added block node for the arc, when:
- the object type of the output connector is the same as the object type of the respective input connector of the added block node, or
- the object type of the output connector is a descendant of the object type of the respective input connector of the added block node.

4. The designing method of claim 2 or 3, wherein the predetermined tree of object types comprises the following types:
- a root type,
- having the root type has a parent, a literal type, a geometry type, and a matrix type,
- having the literal type as a parent, a real type, a string type, and a Boolean type
- having the geometry type as a parent, a point type, a curve type, a surface type, and a volume type,
- having the matrix type as a parent, a vector type,
- having the real type as a parent, an integer type and a magnitude type, the magnitude type having as children a length type and an angle type,
- having the curve type as a parent, a line type, and
- having the surface type as a parent, a plane type.

5. The designing method of claim 2, 3 or 4, wherein:
- the predetermined tree of object types comprises one or more first object types each convertible into one or more respective second object types, each first object type convertible into a respective second object type being different from and not a descendant of said respective second object type, each first object type being convertible into a respective second object type according to a respective predetermined conversion algorithm, each first object type convertible into a respective second object type being thereby compatible to said respective second object type,
- the incompatibility metric penalizes, for a given arc combination, for each given arc for which the object type of the output connector is convertible into the object type of the respective input connector of the added block node, occurrence of the given arc.

6. The designing method of claim 5, wherein the incompatibility metric penalizes said occurrence to a higher extent than said tree distance, wherein optionally one occurrence is penalized more than 100 times, 200 times, or 500 times, for example about 1000 times, a tree distance of 1.

7. The designing method of claim 5 or 6, wherein the incompatibility metric is equal, for a given arc combination, to a sum of a number of one or more penalties equal to the cardinality of the combination, each arc of the given arc combination providing a penalty in the sum equal to a value higher than 100, 200, or 500, for example equal to about 1000, when:
- the object type of the output connector is convertible into the object type of the respective input connector.

8. The designing method of claim 5, 6 or 7, wherein:
- the real type is convertible into the integer type, into the length type, and into the angle type,
- the integer type is convertible into the length type, and into the angle type,
- the Boolean type is convertible into the integer type,
- the point type is convertible into the vector type,
- the curve type is convertible into the plane type,
- the line type is convertible into the vector type,
- the plane type is convertible into the vector type, into the line type, and into the matrix type, and
- the volume type is convertible into the surface type.

9. The designing method of any one of claims 5 to 8, wherein a first object type is compatible to a second object type only if the first object type is a descendant of the second object type or the first object type is convertible into the second object type.

10. The designing method of any one of claims 1 to 9, wherein the user-action (S60) comprises navigating in a menu to select the respective operator of the subset.

11. The method of claim 10, wherein the menu provides an automatic suggestion of several operators of the subset based on the lowest value of an incompatibility metric computed per operator.

12. The method of claim 11, wherein each operator has a searchable name, the user-action (S60) comprising performing a semantic search in the menu, the automatic suggestion being based on the lowest value of an incompatibility metric computed per operator matching the semantic search.

13. A computer program comprising instructions which, when executed by a processor, cause the processor to perform the designing method according to any one of claim 1 to 12.

14. A data storage medium having stored thereon the computer program of claim 13.

15. A computer system comprising memory having stored thereon the computer program of claim 13, and a processor coupled to said memory and configured to execute the computer program.
